# EUROPEAN PATENT SPECIFICATION

(11) **EP 3 993 488 B1**
(45) Date of publication and mention of the grant of the patent: **26.02.2025**
(21) Application number: 20840031.7
(22) Date of filing: 03.07.2020
(51) Int. Cl.: H04W 28/02, H04L 1/00, H04L 47/28, H04W 74/00, H04W 84/12

(54) **METHOD FOR SCHEDULING TIME DELAY SENSITIVITY SERVICE REPORTING AND METHOD FOR REPORTING TIME DELAY SENSITIVITY SERVICE**
VERFAHREN ZUR PLANUNG DER MELDUNG DES ZEITVERZÖGERUNGSEMPFINDLICHKEITSDIENSTES UND VERFAHREN ZUR MELDUNG EINES ZEITVERZÖGERUNGSEMPFINDLICHKEITSDIENSTES
PROCÉDÉ DE PLANIFICATION DE RAPPORT DE SERVICE DE SENSIBILITÉ À RETARD TEMPOREL ET PROCÉDÉ DE RAPPORT DE SERVICE DE SENSIBILITÉ À RETARD TEMPOREL

(30) Priority: 12.07.2019 CN 201910631344
(43) Date of publication of application: 04.05.2022
(60) Divisional application: 24221024.3
(73) Proprietor: Huawei Technologies Co., Ltd., Longgang District Shenzhen, Guangdong 518129 (CN)
(72) Inventor: WU, Weimin, Wuhan, Hubei 430074 (CN); CHEN, Guiru, Wuhan, Hubei 430074 (CN); YU, Jian, Shenzhen, Guangdong 518129 (CN)
(74) Representative: Epping - Hermann - Fischer
(86) International application number: PCT/CN2020/100040
(87) International publication number: WO 2021/008385

(56) References cited:
- WO-A1-2018/182688
- WO-A1-2019/125396
- WO-A1-2019/132861
- US-A1- 2018 184 438
- US-A1- 2018 184 438
- US-A1- 2018 184 450
- KEVIN STANTON (INTEL): "Time-Sensitive Applications Support in EHT", vol. 802.11 EHT, 11 March 2019 (2019-03-11), pages 1 - 18, XP068148105, Retrieved from the Internet <URL:https://mentor.ieee.org/802.11/dcn/19/11-19-0373-00-0eht-time-sensitive-applications-support-in-eht.pptx> [retrieved on 20190311]

## Description

### TECHNICAL FIELD

This application relates to the communications field, and in particular, to a method for scheduling reporting of a delay-sensitive service, and a method, apparatus, and system for reporting a delay-sensitive service.

### BACKGROUND

With development of communication, requirements on delays of various services are increasing. Services having high requirements on delays may be referred to as time-sensitive network (time-sensitive network, TSN) services, for example, a voice, video, an augmented reality (augmented reality, AR) technology, a virtual reality (virtual reality, VR) technology, a real-time battle game, industrial Internet of Things, and the like.

For wireless transmission, stations (station, STA) obtain a transmission resource through contention and perform transmission. However, for a service, for example, the TSN service, having a relatively high requirement on a delay, when a transmission resource is obtained through contention, because the service having the relatively high requirement on the delay may not necessarily obtain a channel through contention, a length of the delay cannot be controlled. In an existing solution, when learning that a STA 1 needs to upload TSN service data, an access point (access point, AP) schedules a transmission resource for the STA 1, so that the STA 1 can upload the TSN service data based on the transmission resource scheduled by the AP. However, when the AP is receiving data sent by a STA 2, the AP cannot learn that the STA 1 needs to transmit the TSN service data. As a result, a delay of reporting the TSN service by the STA 1 is relatively long. Therefore, how to reduce the delay of reporting the TSN service by the STA, and implement promptly reporting of the TSN service becomes a problem to be urgently resolved.

US20180184438A1 describes systems, methods, and apparatus related to wireless time sensitive networking (TSN). A device may determine a beacon frame. The device may cause to send the beacon frame to a second device and a third device. The device may cause to send first scheduling information to allocate a slot for receiving a first transmission from the second device. The device may determine a service period for additional slots for receiving a second transmission from the third device. The device may cause to send second scheduling information to allocate the additional slots. A device may receive a data frame including routing information for frame forwarding. The device may decode the routing information for a first preamble. The device may determine that the first preamble matches a second preamble. The device may cause to send the routing information to a second device while receiving the data frame.

### SUMMARY

This application provides a method for scheduling reporting of a delay-sensitive service, and a method, apparatus, and system for reporting a delay-sensitive service, to reserve a time block for a STA having TSN information to be reported, so that the STA having the TSN information to be reported may upload the TSN information in the reserved time block. This enables the STA to promptly report or transmit the TSN information. The invention is defined in the claims. In view of this, a first aspect of this application provides a method for scheduling reporting of a delay-sensitive service. The method includes:
An access point AP broadcasts a first trigger frame to Q stations STAs. The first trigger frame is used to schedule the Q stations to send a physical layer protocol data unit PPDU, the PPDU includes a plurality of time blocks, and the plurality of time blocks include a first time block and a second time block. The first time block is used by K STAs in the Q STAs to transmit uplink data, and the second time block is used by N STAs in the Q STAs to transmit time-sensitive network TSN information. Q is a positive integer greater than or equal to 1, K is a positive integer less than or equal to Q, N is a positive integer less than or equal to Q, and the TSN information is TSN service-related data. The AP receives the PPDU. The first time block of the PPDU includes uplink data of all or some STAs in the K STAs, and the second time block of the PPDU includes TSN information of all or some STAs in the N STAs. Before the AP receives the TSN information of the all or some STAs in the N STAs, if the AP performs data transmission with the all or some STAs in the K STAs on a first link, the AP sends a termination indication to the all or some STAs in the K STAs on a second link, wherein the termination indication is used to indicate to terminate the data transmission; and after the AP receives the TSN information of the all or some STAs in the N STAs, the AP sends a transmission indication to the all or some STAs in the K STAs, wherein the transmission indication is used to indicate to continue the data transmission.

The first time block of the PPDU includes the uplink data of the all or some STAs in the K STAs, and the second time block of the PPDU includes the TSN information of the all or some STAs in the N STAs. Therefore, the AP reserves a time block for a STA having TSN service, and the STA having the TSN service may report the TSN information to the AP in the reserved time block, to transmit the TSN information without contending, for an upload resource, with a STA having no TSN service. The AP can promptly obtain the TSN information by using the second time block, to implement prompt reporting of the TSN information by the STA, and reduce a reporting delay, of the TSN service, caused by contention for the upload resource.

A second aspect of this application provides a method for reporting a delay-sensitive service. The method includes:
A STA receives a first trigger frame from an AP. The first trigger frame is used to to schedule sending of a PPDU, the PPDU includes a plurality of time blocks, and the plurality of time blocks include a first time block and a second time block. The first time block is used to transmit uplink data, and the second time block is used to transmit TSN information. The STA sends the TSN information to the AP in the second time block of the PPDU. The TSN information is TSN service-related data. Before the STA sends the TSN information if the STA performs data transmission with the AP on a first link, the STA receives a termination indication on a second link, wherein the termination indication is used to indicate to terminate the data transmission; and after the STA sends the TSN information, the STA receives a transmission indication, wherein the transmission indication is used to indicate to continue the data transmission. Therefore, in this implementation of this application, the STA may transmit the uplink data in the first time block, and upload the TSN information in the second time block. The AP obtains the TSN information in the second time block. It may be understood that the AP reserves a time block resource for the STA to transmit the TSN information. In this way, the STA can promptly report a TSN service. This reduces a delay in transmitting the TSN information, and improves transmission efficiency of the TSN information.

The following describes some possible implementations with reference to the first aspect and the second aspect.

In a possible implementation, the TSN information may include at least one of a TSN service reporting indication or TSN service transmission data, and the TSN service reporting indication is used to indicate that a corresponding STA has the TSN service transmission data to be uploaded. Therefore, the STA may upload the TSN service reporting indication in the second time block, to indicate that the STA has the to-be-transmitted TSN service data, so that the AP can promptly allocate, to the STA, a network resource for transmitting the TSN service transmission data. Alternatively, the STA may directly upload the TSN service transmission data in the second time block, to implement prompt transmission of the TSN service transmission data.

In a possible implementation, the TSN service reporting indication includes a resource request and TSN service type information. The resource request is used to request a network resource, and the TSN service type information is used to indicate that a type of data transmitted by using the network resource requested by the resource request is the TSN service. Therefore, in an implementation of this application, the TSN service reporting indication may be used to request, from the AP, the network resource for transmitting the TSN service transmission data, to implement prompt transmission of the TSN service transmission data, and reduce a transmission delay of the TSN service transmission data.

In a possible implementation, the first trigger frame includes a plurality of pieces of time block allocation information, and the time block allocation information includes information about the first time block and information about the second time block. Alternatively, the first trigger frame includes preset period information, and the preset period information is used to determine the first time block and the second time block. Therefore, the STA may determine, by using the first trigger frame, the first time block for uploading the uplink data and the second time block for uploading the TSN information, and upload the TSN information by using the second time block. This reduces a delay of reporting the TSN service.

In all claimed implementations, before the AP receives the TSN information of the all or some STAs in the N STAs, if the AP performs data transmission with the all or some STAs in the K STAs on a first link, the AP sends a termination indication to the all or some STAs in the K STAs on a second link. The termination indication is used to indicate to terminate the data transmission. After the AP receives the TSN information of the all or some STAs in the N STAs, the AP sends a transmission indication to the all or some STAs in the K STAs. The transmission indication is used to indicate to continue the data transmission.

In a possible implementation, the plurality of time blocks further include a third time block. The third time block is before the second time block, and the third time block is used by the N STAs to upload a preset field before reporting the TSN information. The preset field is used by the AP to demodulate the TSN information carried in the second time block. This can improve accuracy of a result of demodulation performed by the AP on the TSN information.

In a possible implementation, a third trigger frame and a fourth trigger frame are aggregated in the first trigger frame. The third trigger frame is used to schedule the K STAs to report the uplink data in the first time block, and the fourth trigger frame is used to schedule the N STAs to report the TSN information in the second time block. Therefore, in this implementation of this application, the third trigger frame and the fourth trigger frame may be aggregated in the first trigger frame, to notify the STA of the first time block for uploading the uplink data and the second time block for uploading the TSN information.

In a possible implementation, the first trigger frame includes M user fields, and M is a positive integer. K user fields in the M user fields indicate the K STAs to upload the uplink data, and remaining M - K user fields are used to indicate the N STAs to upload the TSN information. In this implementation of this application, the M user fields may be used to notify the STA of the first time block for uploading the uplink data and the second time block for uploading the TSN information.

In a possible implementation, the N STAs are grouped into one or more groups of STAs, and identifiers of STAs included in each group of STAs in the one or more groups of STAs are consecutive identifiers. The K user fields include association identifiers of the K STAs, and the M - K user fields include a start identifier of each group of STAs in the one or more groups of STAs. In this implementation of this application, the N STAs may be grouped into the one or more groups, and each group of STAs may indicate a corresponding time block by using one user field, so that the first trigger frame may indicate time blocks corresponding to a plurality of STAs.

In a possible implementation, the M - K user fields further include first indication information indicating a quantity of STAs included in each group of STAs. Therefore, the quantity of STAs included in each group of STAs may be indicated by using the first indication information, so that the STAs can promptly learn time blocks corresponding to the STAs, and promptly upload the TSN information.

In a possible implementation, the M - K user fields further include second indication information used to schedule the N STAs to report the TSN information. Therefore, the STA learns that the TSN information may be reported based on the second indication information used to schedule the N STAs to report the TSN information, so that the STA promptly uploads the TSN information. This reduces a delay of uploading the TSN information.

In a possible implementation, a value of M - K is the same as a quantity of time blocks, in the PPDU, used to report the TSN information. In this implementation of this application, each of the M - K user fields may correspond to one time block. Therefore, the value of M - K is the same as the quantity of time blocks, in the PPDU, used to report the TSN information. In this way, the STA can accurately learn the time block for uploading the TSN information.

In a possible implementation, first K user fields in the M user fields include association identifiers of the K STAs, and the first trigger frame further includes a common field. The common field includes third indication information indicating a value of K, or the common field includes fourth indication information indicating a value of M - K. In this implementation of this application, the first K user fields in the M user fields may be preset to correspond to time blocks for uploading the uplink data, and the value of K or the value of M - K may be learned by using the common field. Therefore, the STA can accurately determine the time block for uploading the TSN information, and then promptly upload the TSN information.

In a possible implementation, a symbol in the second time block includes L groups of subcarriers, K groups of subcarriers in the L groups of subcarriers are used by the K STAs to send the uplink data, and L - K groups of subcarriers in the L groups of subcarriers are used to transmit the TSN information. In this implementation of this application, the symbol in the second time block includes the L groups of subcarriers. The K STAs may use the K groups of subcarriers in the L groups of subcarriers to send the uplink data, or maintain a connection to the AP, to avoid uplink data transmission between the K STAs and the AP from interrupted.

In a possible implementation, the method further includes: If the AP detects, in the second time block, that a signal is sent, the AP determines that a STA corresponding to the signal has TSN service transmission data to be uploaded. In this implementation of this application, the STA may send the signal in the second time block, so that the AP can quickly learn that the STA has the TSN service transmission data to be transmitted, and then promptly schedule a network resource for the STA to transmit the TSN service transmission data. This reduces a delay of transmitting the TSN service transmission data.

A fifth aspect of this application provides an AP. The AP has a function of implementing the method for scheduling reporting of a delay-sensitive service according to the first aspect. The function may be implemented by hardware, or may be implemented by hardware executing corresponding software. The hardware or the software includes one or more modules corresponding to the function.

The AP according to the fifth aspect of this application may specifically include a transceiver, configured to broadcast a first trigger frame to Q stations STAs. The first trigger frame is used to schedule the Q stations to send a physical layer protocol data unit PPDU, the PPDU includes a plurality of time blocks, and the plurality of time blocks include a first time block and a second time block. The first time block is used by K STAs in the Q STAs to transmit uplink data, and the second time block is used by N STAs in the Q STAs to transmit time-sensitive network TSN information. Q is a positive integer greater than or equal to 1, K is a positive integer less than or equal to Q, N is a positive integer less than or equal to Q, and the TSN information is TSN service-related data. The transceiver is further configured to receive the PPDU, the first time block of the PPDU includes uplink data of all or some STAs in the K STAs, and the second time block of the PPDU includes TSN information of all or some STAs in the N STAs. The transceiver is further configured to: before the AP receives the TSN information of the all or some STAs in the N STAs, if the all or some STAs in the K STAs perform data transmission on a first link, send a termination indication to the all or some STAs in the K STAs on a second link, wherein the termination indication is used to indicate to terminate the data transmission. The transceiver is further configured to: after the AP receives the TSN information of the all or some STAs in the N STAs, send a transmission indication to the all or some STAs in the K STAs, wherein the transmission indication is used to indicate to continue the data transmission.

With reference to the AP according to the fifth aspect, the following describes some possible implementations.

In a possible implementation, a third trigger frame and a fourth trigger frame are aggregated in the first trigger frame.

The third trigger frame is used to schedule the K STAs to report the uplink data in the first time block, and the fourth trigger frame is used to schedule the N STAs to report the TSN information in the second time block.

In a possible implementation, the first trigger frame includes M user fields, and M is a positive integer.

K user fields in the M user fields indicate the K STAs to upload the uplink data, and remaining M - K user fields are used to indicate the N STAs to upload the TSN information.

In a possible implementation, the N STAs are grouped into one or more groups of STAs, and identifiers of STAs included in each group of STAs in the one or more groups of STAs are consecutive identifiers.

The K user fields include association identifiers of the K STAs, and the M - K user fields include a start identifier of each group of STAs in the one or more groups of STAs.

In a possible implementation, the M - K user fields further include first indication information indicating a quantity of STAs included in each group of STAs.

In a possible implementation, the M - K user fields further include second indication information used to schedule the N STAs to report the TSN information.

In a possible implementation, a value of M - K is the same as a quantity of time blocks, in the PPDU, used to report the TSN information.

In a possible implementation, first K user fields in the M user fields include association identifiers of the K STAs, and the first trigger frame further includes a common field. The common field includes third indication information indicating a value of K, or the common field includes fourth indication information indicating a value of M - K.

### BRIEF DESCRIPTION OF DRAWINGS

FIG. 1 is a schematic diagram of a communications system according to an embodiment of this application;
FIG. 2 is a schematic flowchart of a method according to an embodiment of this application;
FIG. 3A is a schematic diagram of an application scenario in a method according to an embodiment of this application;
FIG. 3B is a schematic diagram of another application scenario in a method according to an embodiment of this application;
FIG. 4 is a schematic diagram of a structure of a first trigger frame in a method according to an embodiment of this application;
FIG. 5 is another schematic diagram of a structure of a first trigger frame in a method according to an embodiment of this application;
FIG. 6 is another schematic diagram of a structure of a first trigger frame in a method according to an embodiment of this application;
FIG. 7 is another schematic diagram of a structure of a first trigger frame in a method according to an embodiment of this application;
FIG. 8 is a schematic diagram of a structure of an uplink PPDU in a method according to an embodiment of this application;
FIG. 9 is another schematic diagram of a structure of an uplink PPDU in a method according to an embodiment of this application;
FIG. 10 is another schematic diagram of a structure of an uplink PPDU in a method according to an embodiment of this application;
FIG. 11 is a schematic diagram of resource scheduling in a method according to an embodiment of this application;
FIG. 12 is another schematic diagram of resource scheduling in a method according to an embodiment of this application;
FIG. 13 is another schematic flowchart in a method according to an embodiment of this application;
FIG. 14 is another schematic diagram of a structure of an uplink PPDU in a method according to an embodiment of this application;
FIG. 15 is another schematic flowchart in a method according to an embodiment of this application;
FIG. 16 is a schematic diagram of another application scenario in a method according to an embodiment of this application;
FIG. 17 is a schematic diagram of a structure of an apparatus according to an embodiment of this application; and
FIG. 18 is another schematic diagram of a structure of an apparatus according to an embodiment of this application.

### DESCRIPTION OF EMBODIMENTS

This application provides a method for scheduling reporting of a delay-sensitive service, and a method, apparatus, and system for reporting a delay-sensitive service, to reserve a time block for a STA having TSN information to be reported, so that the STA having the TSN information to be reported may upload the TSN information in the reserved time block. This enables the STA to promptly report the TSN information.

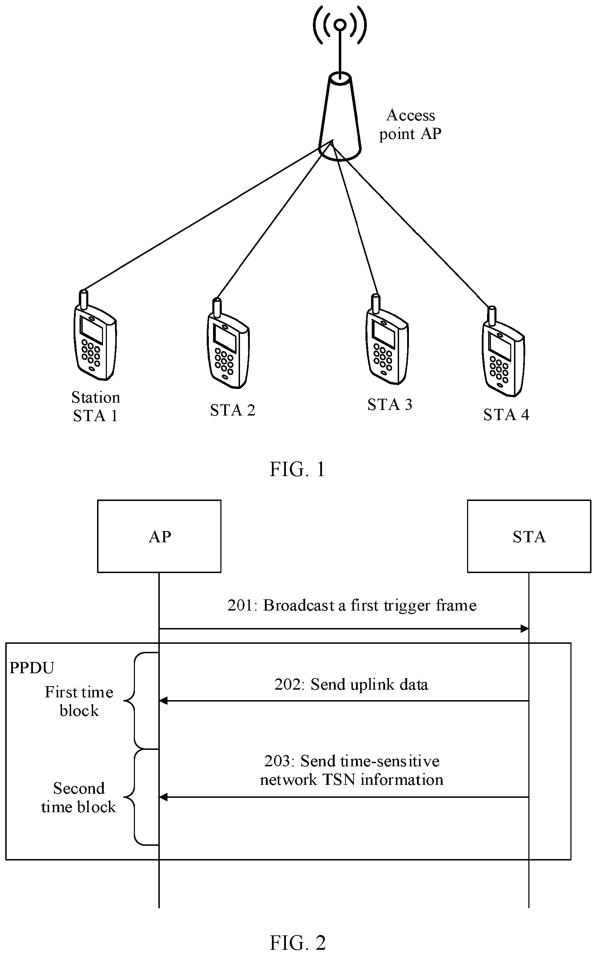

First, the method for scheduling reporting of a delay-sensitive service and the method for reporting a delay-sensitive service according to this application may be applied to various communications systems. The communications system may include an AP and one or more STAs. For example, the communications system is shown in FIG. 1.

The communications system includes an AP, a STA 1, a STA 2, a STA 3, and a STA 4. The STA 1, the STA 2, the STA 3, and the STA 4 access the AP. The STA 1, the STA 2, the STA 3, and the STA 4 may perform data transmission with the AP.

In the following embodiment of this application, a transmission manner in which the AP transmits data to the STA is referred to as delivery, and a transmission manner in which the STA transmits data to the AP is referred to as uploading or reporting. Details are not described below again.

In addition, the communications system according to FIG. 1 may be a partial structure in another communications system, or may access another system. For example, the communications system shown in FIG. 1 may be a wireless local area network communications system, and the AP may further access the another communications system. Alternatively, the communications system shown in FIG. 1 may be the partial structure in the another communications system. The another communications system may include a 5th generation (5th Generation, 5G) mobile communications technology system, a long term evolution (long term evolution, LTE) system, a global system for mobile communications (global system for mobile communications, GSM), a code division multiple access (code division multiple access, CDMA) network, a wideband code division multiple access (wideband code division multiple access, WCDMA) network, or the like. The another communications system may alternatively be a communications network or a communications system such as a worldwide interoperability for microwave access (worldwide interoperability for microwave access, WiMAX) network or a wireless fidelity (wireless fidelity, Wi-Fi) network.

The access point AP may be a communications apparatus having a wireless communications function, and may be a communications apparatus providing a service for a non-access point station. The AP supports a mobile user to access a wired network, and may be deployed in a home, a building, or a campus. A typical coverage radius of the AP is from tens of meters to hundreds of meters. Certainly, the AP may also be deployed outdoors. The AP is equivalent to a bridge that connects the wired network and a wireless network. A main function of the AP is to connect wireless stations together, and then connect the wireless network to the Ethernet. The AP may support a plurality of communications protocols such as a cellular communications protocol and a WLAN communications protocol. Optionally, the AP may be a device with a wireless fidelity (wireless fidelity, Wi-Fi) chip, and may support the WLAN communications protocol. For example, the AP may support next-generation standard of 802.11ax, for example, 802.11be. Optionally, a multi-link AP may further support 802.11ax, 802.11ac, 802.11n, 802.11g, 802.11b, 802.11a, and the like.

The station STA may be a communications apparatus having the wireless communications function, and may support a plurality of communications protocols such as the cellular communications protocol and the WLAN communications protocol. Optionally, the STA may be a device with a wireless fidelity (wireless fidelity, Wi-Fi) chip, and may support the WLAN communications protocol. For example, a multi-link STA may support next-generation standard of 802.11ax, for example, 802.11be. Optionally, The STA may also support a plurality of WLAN standards such as 802.11ax, 802.11ac, 802.11n, 802.11g, 802.11b, and 802.11a. The STA may alternatively be a terminal device, for example, a mobile phone supporting a Wi-Fi communications function, a tablet computer supporting a Wi-Fi communications function, a set-top box supporting a Wi-Fi communications function, a smart television supporting a Wi-Fi communications function, a smart wearable device supporting a Wi-Fi communications function, a vehicle-mounted communications device supporting a Wi-Fi communications function, and a computer supporting a Wi-Fi communications function. There are a plurality of types of data transmission between the AP and the STA. Specifically, TSN service data may be transmitted between the AP and the STA. TSN services are services, for example, a voice, video, an augmented reality (augmented reality, AR) technology, a virtual reality (virtual reality, VR) technology, a real-time battle game, and industrial Internet of Things that have high requirements on delays.

However, for wireless transmission, especially wireless transmission in an unlicensed spectrum, the STAs obtain a transmission opportunity and perform transmission through contention, and probabilities, for the STAs, of obtaining the transmission opportunity through contention may be different. For example, if low-priority service data is currently being transmitted, high-priority service data can be transmitted only through contention after the low-priority service data transmission is completed. Alternatively, the high-priority service data waits for the AP to schedule an available channel to complete the data transmission. As a result, a delay of the high-priority service data is relatively long, and this is unable to meet service requirements. Therefore, the delay of obtaining the transmission opportunity through contention to perform data transmission cannot be estimated. However, TSN service-related TSN information has a relatively high requirement on a delay. Therefore, that the transmission opportunity is obtained through contention reduces a transmission delay of the TSN service-related TSN information. Therefore, this application provides the method for scheduling reporting of a delay-sensitive service and the method for reporting a delay-sensitive service, to improve transmission efficiency of the TSN service-related TSN information and reduce the transmission delay of the TSN service-related TSN information.

The method for scheduling reporting of a delay-sensitive service according to this application is performed by the AP, and the method for reporting a delay-sensitive service is performed by the STA.

The following describes a procedure of the method for scheduling reporting of a delay-sensitive service and a procedure of the method for reporting a delay-sensitive service according to this application. Refer to FIG. 2.

201: An AP broadcasts a first trigger frame.

The AP may broadcast the first trigger frame to Q STAs. Q is a positive integer greater than or equal to 1. The first trigger frame is used to schedule the Q stations to send an uplink physical layer protocol data unit (physical protocol data unit, PPDU).

The PPDU includes a plurality of time blocks, and the plurality of time blocks include a first time block and a second time block. The first time block is used by K STAs in the Q STAs to upload uplink data to the AP, and the second time block is used by N STAs in the Q STAs to upload TSN service-related TSN information to the AP. K is a positive integer less than or equal to Q, and N is a positive integer less than or equal to Q.

N + K may or may not be equal to Q. In other words, the N STAs and the K STAs may or may not have an intersection. It may be understood that each STA may transmit the uplink data or the TSN information. To be specific, one STA may simultaneously belong to the K STAs and the N STAs.

In a possible implementation, the first trigger frame broadcast by the AP to the STA may include a plurality of pieces of time block allocation information. The plurality of pieces of time block allocation information includes information about the first time block and information about the second time block. For example, the information about the first time block may include duration of the first time block, a quantity of symbols included in the first time block, a location in which the first time block is located in time domain, or the like. Correspondingly, for example, the information about the second time block may include duration of the second time block, a quantity of symbols included in the second time block, a location in which the second time block is located in time domain, or the like.

In another possible implementation, the first trigger frame broadcast by the AP to the STA includes preset period information. The preset period information is used to determine the first time block and the second time block. For example, lengths of all time blocks in the uplink PPDU scheduled by the first trigger frame are the same. Therefore, the preset period information may be directly carried in the first trigger frame, to determine periods of the time blocks. The length of each time block and a location in which each time block is located in time domain are derived based on the periods of the time blocks. For example, if the first trigger frame carries the length of each time block of 160 microseconds (namely, the preset period information), the first trigger frame further carries information about start time. Therefore, after receiving the first trigger frame, the STA can determine the location in which each time block is located in time domain based on the start time and the length of each time block. For example, it starts from the start time. The first 160 microseconds are a time block 1, the subsequent 160 microseconds are a time block 2, and the rest can be deduced by analogy. For another example, if the first trigger frame carries a quantity of symbols included in each time block, and duration of each symbol is 13.6 microseconds, preset period duration is the quantity of symbols * 13.6 microseconds. For another example, if the length of the second time block is a fixed length, the first trigger frame may carry the length of the first time block, or the first trigger frame may carry an indication indicating the length of the first time block, or the like. Therefore, the length of the first time block may be determined based on the first trigger frame. Then, the first time block and the second time block are determined based on the fixed length of the second time block.

In another possible implementation, the first trigger frame broadcast by the AP to the STA may carry a preamble, for example, an extremely high-throughput short training field (extremely high-throughput short training field, EHT-STF), and an extremely high-throughput long training field (extremely high-throughput long training field, EHT-LTF). A quantity of symbols of the preamble may be used to indicate period duration. The length of each time block, the location in which each time block is located in time domain, and the like may be derived based on the period duration. Specifically, one symbol in the preamble may represent preset duration. Therefore, the period duration is the quantity of symbols in the preamble multiplied by the preset duration. After the period duration is determined, the length of each time block, the location in which each time block is located in time domain, and the like may be sequentially determined based on start time.

It should be noted that in the following embodiment of this application, N STAs are the N STAs in step 201, and K STAs are the K STAs in step 201. Details are not described in the following embodiment again.

After the AP broadcasts the first trigger frame to the Q STAs, the AP receives the uplink PPDU. The PPDU includes the plurality of time blocks, for example, the first time block, the second time block, or more time blocks. Specifically, the first time block is used by the STA to upload the uplink data, and the second time block is used by the STA to upload the TSN information. The following uses the first time block and the second time block as an example for description, and the following step 202 and step 203 are described.

202: The STA sends the uplink data to the AP in the first time block.

After the AP broadcasts the first trigger frame to the STA, the STA determines, based on the first trigger frame, that the first time block is used to transmit the uplink data. When the STA in step 202 is one or more of the K STAs in step 201, the STA may send the uplink data in the first time block of the PPDU.

It may also be understood that the first time block of the PPDU received by the AP carries the uplink data sent by all or some STAs in the K STAs.

It should be noted that the uplink data in this embodiment of this application may include non-TSN service-related data, or may include TSN service-related data. This is not limited in this application.

203: The STA sends the TSN information to the AP in the second time block.

After the AP broadcasts the first trigger frame to the STA, the STA determines, based on the first trigger frame, that the second time block is used to transmit the TSN information. When the STA in step 203 is one or more of the N STAs in step 201, the STA uploads the TSN information to the AP in the second time block of the PPDU.

It may also be understood that the second time block of the PPDU received by the AP carries the TSN information sent by all or some STAs in the N STAs.

The second time block of the PPDU may carry a plurality of uplink symbols, and the plurality of symbols may form a plurality of fields. For example, the plurality of fields may include an extremely high-throughput short training field (extremely high-throughput short training field, EHT-STF) or a TSN-LTF field. The EHT-STF field may be used by the AP to perform automatic power gain control. The TSN-LTF may correspond to one or more groups of subcarriers. The STA may upload the TSN information on the corresponding one or more groups of subcarriers.

In another specific implementation, the second time block may carry the TSN information sent by the all or some STAs in the N STAs, and the AP may allocate different subcarriers to different STAs. Therefore, a frequency division manner can be used to avoid a data conflict.

In addition, the AP may further allocate different codewords to different STAs. In a process of uploading the TSN information, the STA multiplies the TSN information by different codewords, to avoid the data conflict. A different codeword may be allocated to each STA, and the codeword may include a character of a preset length. The codeword is, for example, a P matrix commonly used in a wireless local area network (wireless local area network, WLAN). Therefore, in this implementation of this application, a code division manner is used to avoid a conflict between data transmitted on different frequency resources in a same time block.

In a possible implementation, the TSN information in step 203 may include one of a TSN service reporting indication or an indication in TSN service transmission data. The TSN service reporting indication is used to indicate that the STA has TSN service transmission data to be transmitted. It may be understood that, when the STA has the TSN service transmission data to be transmitted, the STA may send the TSN service reporting indication to the AP, to notify the AP that the STA has the TSN service transmission data to be transmitted. Subsequently, the AP may schedule a resource, for the STA, used to transmit the TSN service transmission data.

It may be understood that, the second time block of the PPDU may carry TSN service reporting indications sent by the all or some STAs in the N STAs, or may carry the TSN service transmission data sent by the all or some STAs in the N STAs.

In a specific implementation, the TSN service reporting indication may specifically include a resource request and TSN service type information. The resource request is used to request the AP to allocate a network resource to the STA. The network resource may be a time domain resource, or may be a frequency domain resource. The time domain resource is, for example, a time block separately allocated by the AP. The frequency domain resource is, for example, a frequency band separately allocated by the AP. The TSN service type information means data transmitted by the requested network resource is the TSN service transmission data. Therefore, in this implementation of this application, the STA may send the TSN service reporting indication to the AP in the second time block, to request the resource for transmitting the TSN service transmission data, so that the AP can accurately receive the TSN service reporting indication in the second time block. In addition, the network resource may be subsequently allocated to the STA, so that the TSN service transmission data can be accurately and quickly transmitted.

In another specific implementation, the all or some STAs in the N STAs may indicate, only by sending a signal in the second time block allocated by the AP, that the STA has the TSN service transmission data to be uploaded. It may be understood that if the AP detects, in the second time block, that the signal is sent, the AP determines that a STA corresponding to the signal has the TSN service transmission data to be uploaded. For example, one STA in the N STAs may generate energy on one group of subcarriers corresponding to the second time block. When detecting that the energy exists on the group of subcarriers, the AP may determine that the STA has the TSN service transmission data to be uploaded.

Therefore, in this embodiment of this application, the AP schedules the uplink PPDU by using the first trigger frame. The PPDU includes the plurality of time blocks, and may specifically include the first time block and the second time block. The first time block is used to upload the uplink data, and the second time block is used to upload the TSN information. It may be understood that the AP reserves the second time block for the STA that has the TSN information, to upload the TSN information. Therefore, when the STA has the TSN information that needs to be reported to the AP, the STA may report the TSN information to the AP in the second time block, so that the AP can accurately receive the TSN information transmitted by the STA. This implements accurate reporting or data transmission of the TSN information by the STA. In addition, a reporting delay, of the TSN service, caused by contention for an upload resource can be reduced.

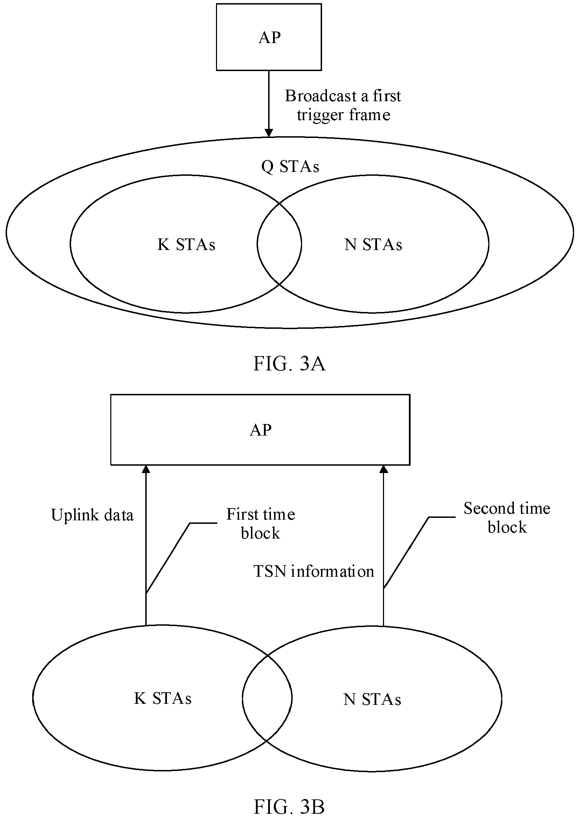

Based on the foregoing FIG. 2, the following uses a specific application scenario as an example. As shown in FIG. 3A and FIG. 3B, the method for scheduling reporting of a delay-sensitive service and the method for reporting a delay-sensitive service according to this application are described in more detail.

First, refer to FIG. 3A. The AP broadcasts the first trigger frame to the Q STAs.

The Q STAs include the K STAs in step 201, and may further include the N STAs in step 201. The first trigger frame is used to schedule the uplink PPDU, and the uplink PPDU includes the plurality of time blocks. Specifically, the plurality of time blocks may include the first time block and the second time block. The first time block is used by the K STAs to upload the uplink data, and the second time block is used by the N STAs to upload the TSN information. It should be further noted that, when delivering the first trigger frame, the AP may not know which STAs have the TSN information to be reported. Therefore, the AP may trigger, in a polling manner, the STA to report the TSN information.

For example, if 100 STAs access the AP, when broadcasting the first trigger frame for an initial time, the AP may schedule an uplink PPDU 1. 25 STAs in the 100 STAs upload the TSN information in the second time block. There may be one or more first time blocks and second time blocks. Subsequently, the AP may further broadcast the first trigger frame again to schedule an uplink PPDU 2. Another 25 STAs in the 100 STAs are scheduled to upload the TSN information in the second time block, and the 25 STAs are different from the 25 STAs scheduled by the trigger frame broadcast for the initial time. The rest may be deduced by analogy. After polling is performed for four times, that is, after the first trigger frame is broadcast for four times, triggering of reporting the TSN information by the 100 STAs may be completed.

The following specifically describes a structure of the first trigger frame.

The first trigger frame includes but is not limited to the following plurality of forms.

Form 1: The first trigger frame is obtained by aggregating a plurality of frames.

Specifically, the first trigger frame may be obtained by aggregating a third trigger frame and a fourth trigger frame.

A quantity of aggregated third trigger frames in the first trigger frame may be one frame or a plurality of frames. A quantity of aggregated fourth trigger frames in the first trigger frame may be one frame or a plurality of frames. This is not limited in this application. In the following embodiment of this application, an example in which the first trigger frame includes one frame of the third trigger frame and one frame of the fourth trigger frame is used for description. This is not limited.

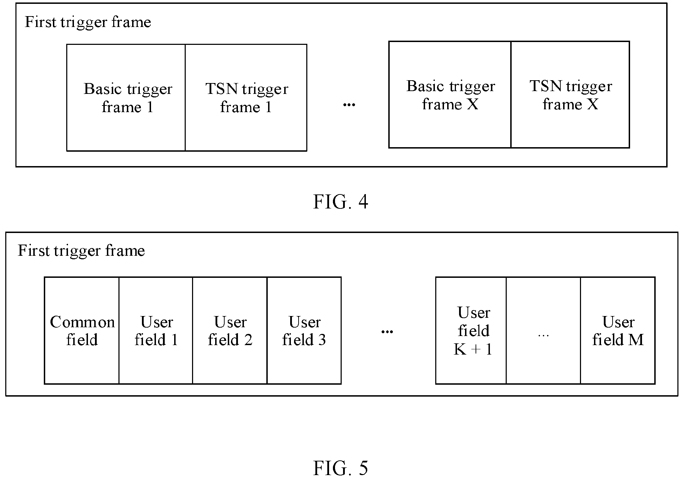

Specifically, the third trigger frame is used to schedule the K STAs to report the uplink data in the first time block, and the fourth trigger frame is used to schedule the N STAs to report the TSN information in the second time block. An example is shown in FIG. 4. A basic trigger frame may be understood as the foregoing third trigger frame, and a TSN trigger frame may be understood as the foregoing fourth trigger frame. One or more basic trigger frames and TSN trigger frames are aggregated in the first trigger frame. The third trigger frame may be connected to the fourth trigger frame. A separator, padding data, or the like may be added between the third trigger frame and the fourth trigger frame. In this way, when receiving the first trigger frame, the STA may distinguish the third trigger frame from the fourth trigger frame.

For example, a plurality of trigger frames (including the third trigger frame and the fourth trigger frame) may be aggregated in an aggregate media access control protocol data unit (aggregate media access control protocol data unit, A-MPDU) manner. The third trigger frame is used to schedule the K STAs to upload the uplink data. The third trigger frame may also be referred to as the basic trigger frame. The fourth trigger frame is used to schedule the N STAs to report the TSN information. The fourth trigger frame may also be referred to as the TSN trigger frame. The TSN trigger frame may be a trigger frame of a null data packet feedback report poll (null data packet feedback report poll, NFRP) variant of the 802.11ax standard. For details, refer to related description in the standard. Details are not described herein.

Therefore, in the form 1, the third trigger frame and the fourth trigger frame may be aggregated in the first trigger frame, to indicate that the K STAs and the N STAs upload time blocks of different data types.

Form 2: The first trigger frame includes M user fields.

K user fields in the M user fields indicate the K STAs to upload the uplink data, and remaining M - K user fields are used to indicate the N STAs to upload the TSN information. M is a positive integer greater than or equal to K.

Specifically, a sequence of the K user fields in the first trigger frame is not limited. The K user fields may be consecutive fields in the M user fields, or may be fields in different locations in the M user fields. For example, the K user fields may be first K user fields in the M user fields, the K user fields may be last K user fields in the M user fields, the K user fields are randomly arranged in the M user fields, or the like.

For example, when the first trigger frame includes the M user fields, the structure of the first trigger frame may be shown in FIG. 5. The first trigger frame includes the M user fields and a common field. Specifically, the common field may include an uplink trigger frame type, uplink bandwidth, a reserved field, and the like. This is not described in this application. In addition, a data format of a user field used to schedule the K STAs to send the uplink data may be different from a data format of a user field used to schedule the N STAs to upload the TSN information.

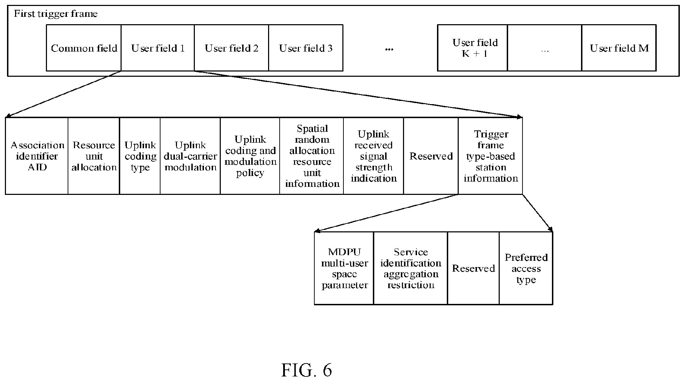

In the K user fields, one user field is used as an example. The one user field may include data related to the uplink data of the scheduled STA. For example, as shown in FIG. 6, the user field may specifically include: an association identifier AID, resource unit allocation, an uplink coding type, uplink dual-carrier modulation, an uplink coding and modulation policy, spatial random allocation resource unit information, an uplink received signal strength indication, a reserved bit, trigger frame type-based station information, and the like. The station information of the trigger frame type may specifically include a media access control protocol data unit (media access control protocol data unit, MPDU) multi-user space parameter, service identification aggregation restriction, a reserved bit, a preferred access type, and the like.

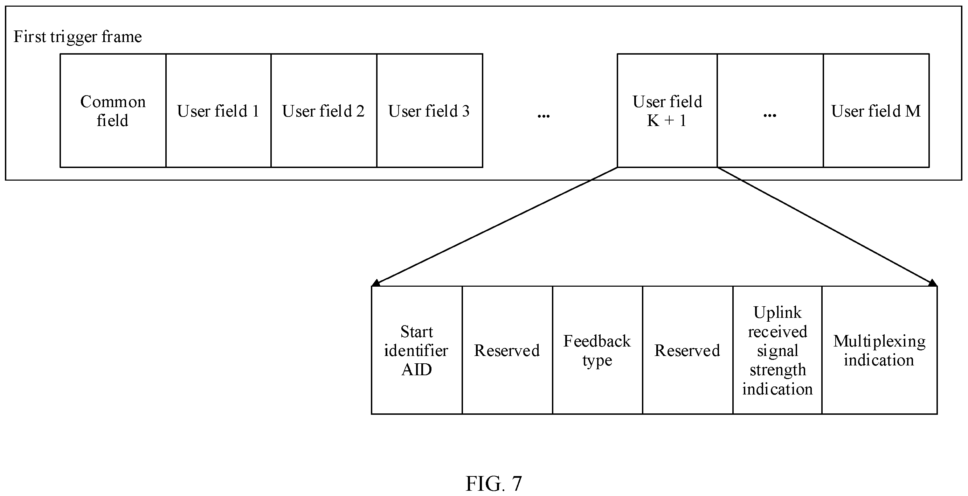

In the M - K user fields, one user field is used as an example. The one user field may include data related to the TSN information of the scheduled STA. For example, as shown in FIG. 7, the user field may specifically include a start identifier AID, a reserved bit, a feedback type, a reserved bit, an uplink received signal strength indication, a multiplexing indication, and the like.

It should be noted that the N STAs may be grouped into one or more groups, each group of STAs in the one or more groups of STAs may include one or more STAs, and a quantity of STAs included in each group of STAs may be the same or different. In addition, identifiers of STAs included in each group of STAs are consecutive identifiers. Usually, one user field may correspond to one group of STAs. If there are a plurality of groups of STAs, a plurality of user fields are included. For example, the N STAs are grouped into M - K groups. In other words, the N STAs are corresponding to the M - K user fields. In addition, each of the M - K user fields further includes a start identifier in consecutive identifiers of a corresponding group of STAs.

The start AID of the user field shown in FIG. 7 is a start identifier in consecutive identifiers of one group of STAs. The feedback type is a type of data fed back by the scheduled STA. For example, if the scheduled STA uploads the TSN information, the feedback type herein should be a TSN service type, and the feedback type may be understood as second indication information indicating a STA in a corresponding group of STAs to report the TSN information. The uplink received signal strength indication is used to indicate strength of an uplink received signal received by a base station. When uploading the TSN information, the STA may determine power, gain, and the like of the sent uplink signal based on the uplink received signal strength indication.

Each of the M - K user fields further includes first indication information, for example, the multiplexing indication, bandwidth, or a value that directly indicates a quantity of one group of STAs, indicating the quantity of STAs included in each group of STAs.

Therefore, optionally, the user field shown in FIG. 7 further includes the multiplexing indication. The multiplexing indication may be used to indicate a quantity of STAs scheduled by the user field, namely, a quantity of STAs included in one group of STAs corresponding to the user field. In addition to the multiplexing indication, the user field may directly include the value indicating the quantity of one group of STAs. For example, the value indicating the quantity of one group of STAs may be directly added to the reserved bit.

For another example, STAs included in one group of STAs may be further indicated by using the bandwidth. For example, a total quantity of resource units may be derived by using the bandwidth. If one resource unit may correspond to one or more STAs, a quantity of STAs in one group of STAs indirectly indicated may be derived.

When the STA receives the first trigger frame, the STA needs to identify the first trigger frame, and the STA needs to learn a quantity of user fields, in the M user fields, used to schedule the STA to send the uplink data, and a quantity of user fields, in the M user fields, used to schedule the STA to send the TSN information. Therefore, the K user fields further need to include indication information that directly or indirectly indicates a value of K or a value of M - K, or that directly indicates a type of scheduled data in each user field. Specifically, this application provides a plurality of different indication manners, including the following plurality of scenarios.

Indication manner 1: Set a start bit of each user field to a preset value.

The preset value may be a value preset between the AP and the STA, and the preset value may be used to indicate that a current field is a field for scheduling the STA to upload the uplink data. Alternatively, the preset value may be used to indicate that the current field is a field for scheduling the STA to upload the TSN information. When receiving the first trigger frame, the STA may determine, based on whether a value of the start bit of each user field is the preset value, a type of scheduled data by the user field.

For example, a location of the association identifier shown in FIG. 6 or a location of the start AID shown in FIG. 6 is set to the preset value, for example, 2045, to indicate that the user field is a user field that indicates the STA to report the TSN information. If the location of the association identifier shown in FIG. 6 or the location of the start AID shown in FIG. 7 is 2046, the user field indicates that any STA having the TSN service may report the TSN information through contention. In addition, the start AID or the association identifier may be indicated in another location of the user field. For example, the start AID is set in the first reserved bit in FIG. 7, or one or more bytes are added, before the resource unit allocation shown in FIG. 6, to set the association identifier.

Indication manner 2: The first K user fields are user fields for scheduling the STA to upload the uplink data, and the remaining M - K user fields are user fields for scheduling the STA to upload the TSN information.

The value of K or the value of M - K may be indicated in the common field.

It may be understood that the first trigger frame further includes the common field, and the common field includes third indication information indicating the value of K. Alternatively, the common field includes fourth indication information indicating the value of M - K. For example, K = 3, M = 5; M = 5, M - K = 2; or the like may be carried in the common field.

In addition, in the first K user fields, each user field further includes an association identifier of a corresponding STA, and is used to indicate the STA scheduled by each user field to upload the uplink data. In other words, the first K user fields include association identifiers of the K STAs.

Indication manner 3: The value of K or the value of M - K is indicated by using multiplexed data.

Specifically, a quantity of user fields, namely, the value of M - K, used to schedule the STA to upload the TSN information, may be the same as a quantity of time blocks used to upload the TSN information. The quantity of time blocks for uploading the TSN information may be calculated based on a quantity x of symbols of the time block used to upload the uplink data and a quantity y of symbols used to upload the TSN information.

For example, a total quantity S of symbols of the uplink PPDU may be obtained from the common field, and then a total quantity of time blocks is calculated as S/(x + y). In this way, the quantity of time blocks used to upload the TSN information is determined based on the total quantity of time blocks. In addition, when S/(x + y) is calculated, if a result cannot be exactly divided, the result may be rounded down, and remaining symbols may be used for uplink data transmission. For example, if the quantity of time blocks used to upload the TSN information is the same as the quantity of time blocks used to upload the uplink data, the quantity of time blocks used to upload the TSN information is S/2 * (x + y). It can be obtained that the value of M - K is S/2 * (x + y).

Therefore, in the form 2, the M user fields in the first trigger frame may be used to indicate the K STAs and the N STAs to upload time block resources of different types of data, and the quantity of STAs may be indicated by using a direct indication or an indirect indication. In this way, the STAs can accurately learn respective available time blocks, and complete uploading of the uplink data or the TSN information.

Refer to FIG. 3B. The all or some STAs in the K STAs send the uplink data to the AP in the first time block, and the all or some STAs in the N STAs send the TSN information to the AP in the second time block.

Specifically, the AP may receive the uplink PPDU. The first time block in the uplink PPDU carries the uplink data sent by the all or some STAs in the K STAs to the AP. The second time block in the uplink PPDU carries the TSN information sent by the all or some STAs in the N STAs to the AP.

The following specifically describes the uplink PPDU in this embodiment of this application.

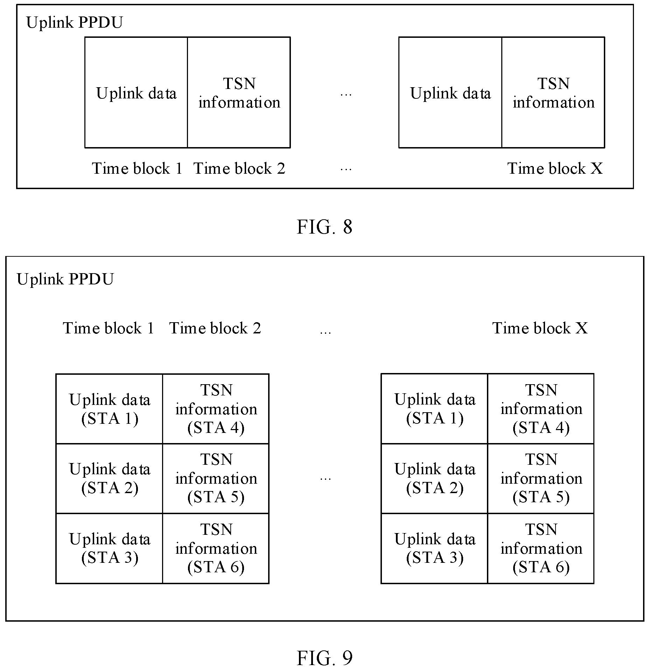

A structure of the uplink PPDU according to this application may be shown in FIG. 8.

The uplink PPDU includes a plurality of time blocks, namely, a plurality of time blocks such as a time block 1, a time block 2, ..., and a time block X shown in FIG. 8. The time block 1 is used to transmit the uplink data, and the time block 2 is used to transmit the TSN information, and the like.

Further, one time block may carry data uploaded by a plurality of STAs. As shown in FIG. 9, the time block 1 may be used by a STA 1, a STA 2, and a STA 3 to upload the uplink data, and the time block 2 may be used by a STA 4, a STA 5, and a STA 6 to upload the TSN information, and the like.

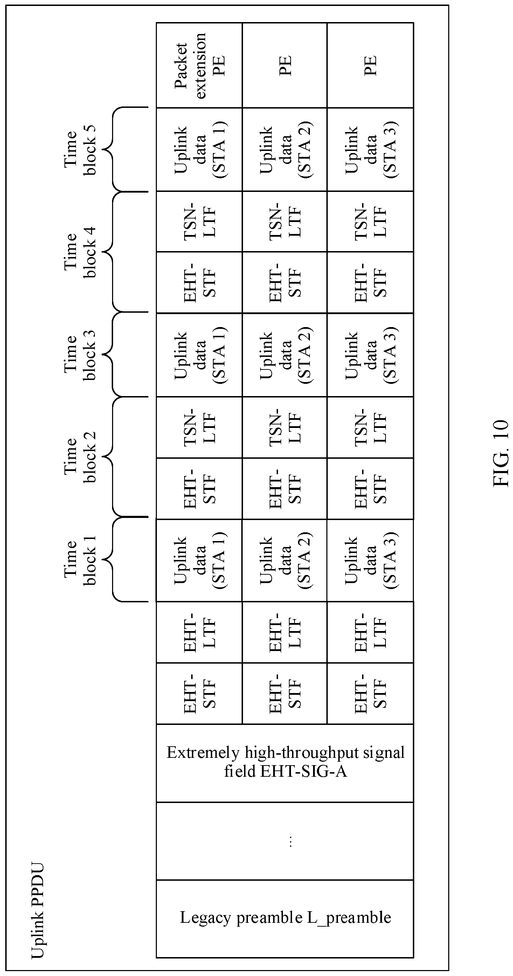

For example, a specific structure of the uplink PPDU may be shown in FIG. 10.

The uplink PPDU may specifically include a data field, and preambles such as an extremely high-throughput signal field-A (extremely high-throughput signal field-A, EHT-SIG-A), an extremely high-throughput short training field (extremely high-throughput short training field, EHT-STF), an extremely high-throughput long training field (extremely high-throughput long training field, EHT-LTF), and a legacy preamble (legacy preamble, L_preamble) field, which may also be referred to as a non-high throughput (none high throughput, non-HT) preamble.

A time block used to report a TSN service indication may be understood as a preamble located in the middle of the data field, and may be usually referred to as a midamble (midamble). The midamble may also be understood as a part of the data field.

The L_preamble may be used to assist in receiving subsequent data in the PPDU, for example, may be used to perform channel estimation, and parse, based on a channel estimation result, data transmitted in a subsequent time block. The EHT-SIG-A may be used to carry bandwidth, a basic service set color, or an identified cell; or carry uplink and downlink indication information, or the like. The EHT-STF may be used by the AP to perform automatic power gain control. For example, the AP may determine, based on the EHT-STF sent by the STA, a gain of power for receiving the time block 1, the time block 3, or the time block 5. The EHT-LTF may be used by the AP to perform channel estimation, and parse, based on the channel estimation, the data transmitted in the subsequent time block. For example, the AP may perform channel estimation on the EHT-LTF sent by the STA, to obtain a channel estimation result. The channel estimation result may be used to demodulate the received uplink data carried in the time block 1, the time block 3, or the time block 5. Packet extension (packet extension, PE) may be used by the AP to obtain more data processing opportunities, for example, may increase data demodulation duration for the AP.

In addition, in addition to the foregoing fields, the PPDU may further include more or fewer fields. This is merely an example for description. Details are not described one by one in this embodiment of this application.

As shown in FIG. 10, K = 3, and three STAs may upload the uplink data by using the time block 1, the time block 3, and the time block 5. The time block 2 may be used to transmit the midamble, namely, the EHT-STF field and the TSN-LTF field. A function of the EHT-STF is described above. Details are not described again.

The TSN-LTF field may include one or more TSN-LTFs, and one TSN-LTF may include one or more subcarriers. The STA may upload the TSN information on the corresponding one or more groups of subcarriers. Specifically, the STA may send a signal on the corresponding one or more groups of subcarriers, that is, generate energy. In this way, the STA can notify the AP that the STA has the TSN service data to be transmitted. Alternatively, the STA may directly transmit the TSN service reporting indication or the TSN service transmission data on the one or more groups of subcarriers.

In a possible implementation, if there are L groups of resources in total in the time block 2 and the time block 4, namely, the second time block. To be specific, the L groups of resources may include L groups of subcarriers, L groups of subcarrier-codeword resources, or the like. The L groups of subcarrier-codeword resources may be understood as that, on a plurality of groups of subcarriers, data transmission of different STAs is implemented through code division. For example, one group of subcarriers may include three different types of codeword resources, which may be understood as three groups of subcarrier-codeword resources. When sending the uplink data, the three STAs separately multiply the uplink data by different codewords, so that the uplink data transmission of the three STAs can be performed on one group of subcarriers. The K STAs may continue to send the uplink data by using K resources in the L groups of resources, and remaining L - K resources may be used to transmit the TSN information. In addition, to avoid impact on data transmission between resources, the K STAs may also use the K resources in the L groups of resources to maintain energy, to avoid the uplink data transmission of the K STAs from being interrupted and a neighboring STA from preempting a channel.

It should be noted that, that the K STAs may continue to send the uplink data by using the K resources in the L groups of resources may be specifically: The K STAs may send pilots on the K resources, and the pilots are used by the K STAs to maintain connections to the AP. When the AP receives the pilot, the AP does not need to process the pilot. It may be understood that the K STAs maintain the energy by using the K resources, to avoid a data connection, to the AP, from interrupted in the uplink data transmission in the time block 3 after the time block 2.

In addition, if a STA in the K STAs has TSN service-related data transmission, the STA may contend for a subcarrier in the time block 1, the time block 3, and the time block 5 to upload the TSN information.

Before or after the transmission of the TSN information shown in FIG. 3B is performed, the method may further include:
If the all or some STAs in the K STAs currently perform uplink data transmission on a first link, the AP may send a termination indication to the all or some STAs in the K STAs on a second link, to indicate the K STAs to terminate the uploading of the uplink data. Then, the AP receives the TSN information uploaded by the all or some STAs in the N STAs. After the uploading of the TSN information uploaded by the all or some STAs in the N STAs is completed, the AP may send, on the first link or the second link to the all or some STAs in the K STAs, a transmission indication for continuing the transmission. The transmission indication indicates the all or some STAs in the K STAs to continue to upload the uplink data to the AP on the first link.

There are a plurality of conditions or scenarios for triggering the AP to send the termination indication to the all or some STAs in the K STAs. This is described below.

Trigger manner 1: The AP determines that the all or some STAs in the N STAs have the TSN information to be uploaded.

Specifically, after receiving, in the second time block, TSN service reporting indications sent by the all or some STAs in the N STAs, the AP may determine that the all or some STAs in the N STAs have the TSN service transmission data to be uploaded. In this case, the all or some STAs in the K STAs are uploading the uplink data on the first link, so that the AP may send the termination indication to the all or some STAs in the K STAs on the second link, to terminate the uploading of the uplink data. In this way, the STA can upload the TSN information in the second time block. This reduces a delay of uploading the TSN information.

Trigger manner 2: It is currently in the second time block.

Specifically, if the all or some STAs in the K STAs upload the uplink data on the first link in the first time block, when entering the second time block, the AP may send the termination indication to the all or some STAs in the K STAs on the second link, to terminate the uploading of the uplink data. In this way, the TSN information can be uploaded in the second time block. This reduces a delay of uploading the TSN information.

In addition, that the AP terminates the uplink data transmission of the all or some STAs in the K STAs, and uploads the TSN information of the all or some STAs in the N STAs includes a plurality of scenarios. This is described below. Scenario 1: The uplink data is uploaded on a frequency band 1, and the TSN service transmission data is scheduled on a frequency band 2.

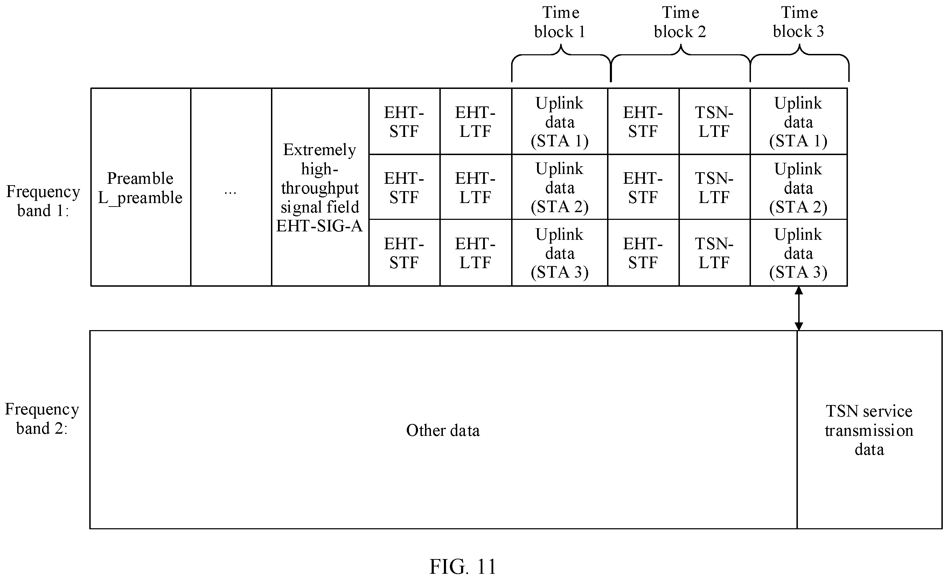

As shown in FIG. 11, the PPDU is transmitted on the frequency band 1, the time block 1 carries the uplink data, the time block 2 carries the midamble, and the time block 3 carries the uplink data. For specific transmission, refer to FIG. 9. Details are not described herein again.

The AP may receive the TSN service reporting indication in a time block, and learn that there is the TSN service transmission data to be uploaded. The AP may schedule a resource, of the frequency band 2, used by the all or some STAs in the N STAs to upload the TSN service transmission data. In addition, transmission of the data transmitted on the frequency band 1 may be terminated, or the transmission may continue.

Therefore, in the scenario 1, when learning that the STA has the TSN service transmission data to be uploaded, the AP may promptly allocate a frequency resource to the STA, to promptly upload the TSN service transmission data. This reduces a delay of uploading the TSN service transmission data.

Scenario 2: The uplink data transmission is terminated in a time block for transmitting the uplink data, and the TSN service transmission data is scheduled to be uploaded.

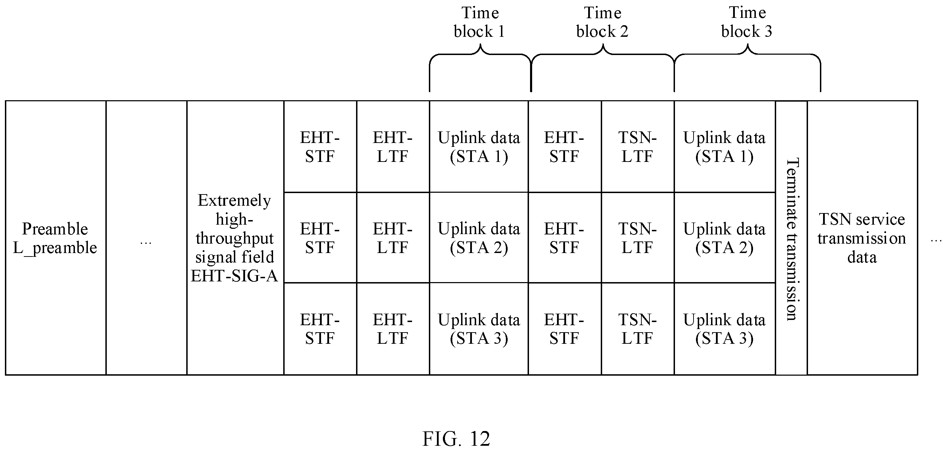

As shown in FIG. 12, if the AP learns that there is the TSN service transmission data to be uploaded, in the time block 3, the AP terminates the uploading of the uplink data on the first link by the all or some STAs in the K STAs, and schedules the STA having the TSN service transmission data to occupy the time block 3 to upload the TSN service transmission data.

Therefore, in the scenario 2, when learning that there is the TSN service transmission data to be uploaded, the AP may promptly allocate a time block resource to upload the TSN service transmission data.

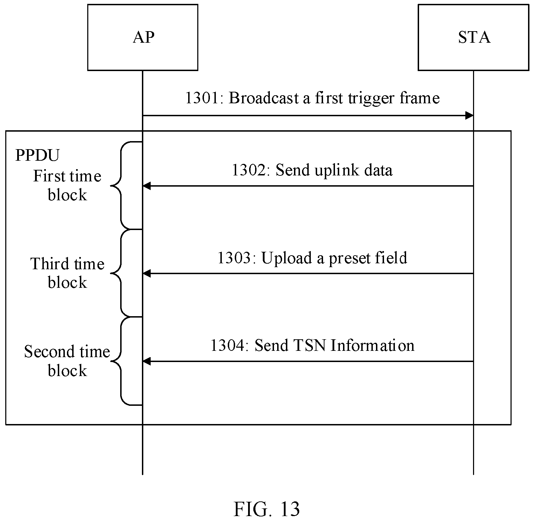

The foregoing describes in detail the method, performed by the AP, for scheduling reporting of a delay-sensitive service and the method, performed by the STA, for reporting a delay-sensitive service according to this application. Refer to FIG. 13. Another schematic flowchart of the method, performed by the AP, for scheduling reporting of a delay-sensitive service and the method, performed by the STA, for reporting a delay-sensitive service according to an embodiment of this application is described below.

1301: The AP broadcasts a first trigger frame to the STA.

1302: The STA sends uplink data to the AP in a first time block.

Step 1301 and step 1302 in this embodiment of this application is similar to foregoing step 201 and step 202. Details are not described herein again.

1303: The STA uploads a preset field in a third time block.

The third time block of a PPDU may carry the preset field, and the third time block is before a second time block. All or some STAs in N STAs may upload the preset field in the third time block, and the preset field may be used by the AP to demodulate TSN information uploaded by the all or some STAs in the N STAs.

Specifically, after receiving, in the third time block of the PPDU, the preset field uploaded by the all or some STAs in the N STAs, the AP performs channel estimation on the preset field, to obtain a channel estimation result.

1304: The STA sends the TSN information to the AP in the second time block.

Step 1304 in this embodiment of this application is similar to foregoing step 203. Details are not described herein again.

In addition, in step 1303, after performing channel estimation on the preset field to obtain the channel estimation result, the AP may demodulate the TSN information based on the channel estimation result.

For example, the AP receives the preset field sent by a STA 5 in the third time block, and performs channel estimation on the preset field to obtain a channel estimation result. After receiving TSN information sent by the STA 5 in the second time block, the AP demodulates the TSN information based on the channel estimation result, so that the AP obtains accurate data obtained after the TSN information is demodulated.

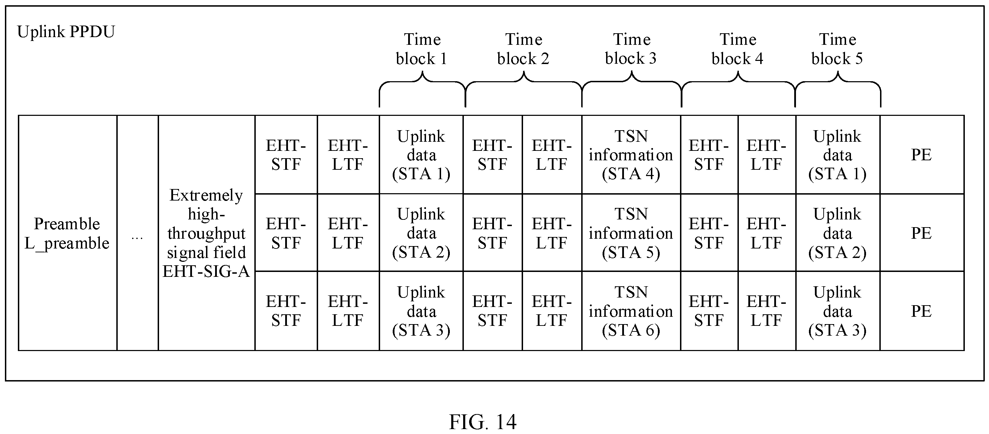

For example, for a structure of an uplink PPDU in this embodiment of this application, refer to FIG. 14. For functions of fields in the PPDU, refer to the foregoing related description in FIG. 10. Details are not described herein again. The preset field may be an EHT-LTF, or certainly may be set to another field. Specifically, the preset field may be adjusted based on an actual application scenario. This is not limited in this application.

The all or some STAs in the N STAs may upload the preset field in the time block 2, so that the AP performs channel estimation. Then, the all or some STAs in the N STAs upload the TSN information in the time block 3. The AP may demodulate, based on the channel estimation result of the preset field in the time block 2, the TSN information uploaded in the time block 3, so that TSN service-related data obtained by demodulating the TSN information is more accurate.

Therefore, in this embodiment of this application, while low-delay transmission of the TSN information is implemented, a demodulation success rate of the received TSN information may further be further improved, and accuracy of the received TSN information is improved.

Foregoing FIG. 2 to FIG. 14 describe in detail the method for scheduling reporting of a delay-sensitive service and the method for reporting a delay-sensitive service according to this application. The following describes another method, performed by an AP, for scheduling reporting of a delay-sensitive service and another method, performed by a STA, for reporting a delay-sensitive service according to this application.

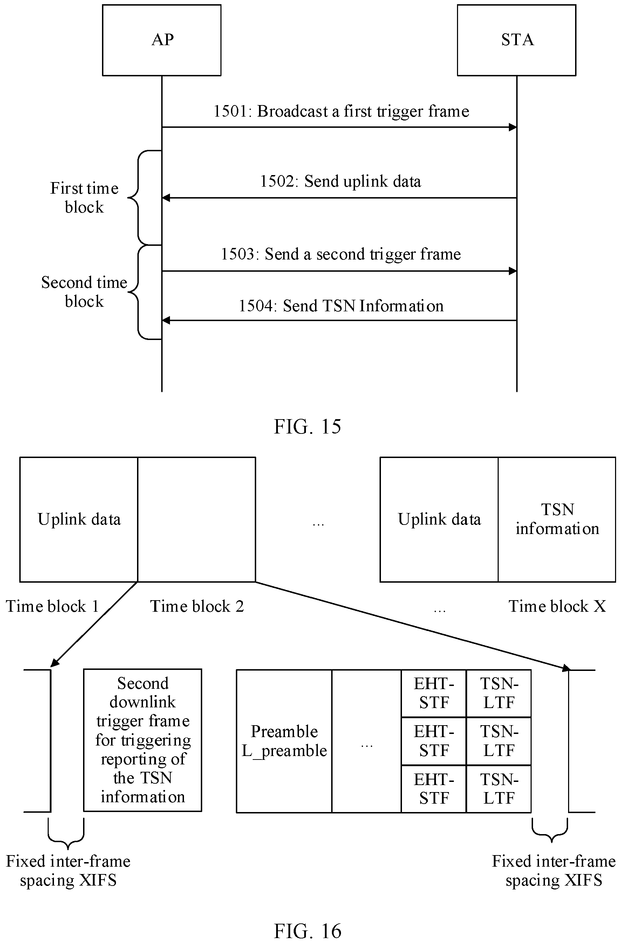

Refer to FIG. 15. This application further provides the another method, performed by the AP, for scheduling reporting of a delay-sensitive service and the another method, performed by the STA, for reporting a delay-sensitive service. For some terms or steps in FIG. 15, refer to related description in foregoing FIG. 2 to FIG. 14. Similar content is not described in this embodiment of this application. This is described below.

1501: The AP broadcasts a first trigger frame.

The AP broadcasts the first trigger frame to Q STAs, the first trigger frame is used to schedule an uplink PPDU, and the uplink PPDU may include a plurality of time blocks. Specifically, the plurality of time blocks may include a first time block and a second time block. The first time block is used by K STAs in the Q STAs to upload uplink data to the AP, and the second time block is used by N STAs in the Q STAs to upload TSN service-related TSN information to the AP. K is a positive integer less than or equal to Q, and N is a positive integer less than or equal to Q.

N + K may or may not be equal to Q. It may be understood that each STA may transmit the uplink data or the TSN information. To be specific, one STA may simultaneously belong to the K STAs and the N STAs.

The first trigger frame may include only information about the first time block. In other words, the AP indicates, by using the first trigger frame, the K STAs to upload the uplink data. For example, the information about the first time block may include a quantity of symbols included in the first time block, duration of the first time block, a location in which the first time block is located in time domain, or the like. Each symbol may correspond to one or more groups of subcarriers, and the K STAs may upload the uplink data on the one or more groups of subcarriers corresponding to each symbol. For the first time block, refer to related description in step 201.

The uplink data may be TSN service-related data, or may be non-TSN service-related data. The uplink data may be specifically adjusted based on an actual application scenario.

1502: The AP receives the uplink data in the first time block.

Step 1502 in this embodiment of this application is similar to foregoing step 202. Details are not described herein again.

1503: The AP broadcasts a second trigger frame in the second time block.

The AP may broadcast the second trigger frame in the second time block. The second trigger frame is used to schedule the N STAs to upload the TSN information in the second time block, and the TSN information is the TSN service-related data.

After receiving the second trigger frame, the N STAs obtain information about the second time block used to report the TSN information, and upload the TSN information in the second time block.

The second trigger frame may include the information about the second time block. For example, the information about the second time block may include a quantity of symbols, duration, or the like of the second time block. Each symbol may correspond to one or more groups of subcarriers, and the N STAs may upload the TSN information on the one or more groups of subcarriers corresponding to each symbol.

Specifically, the second trigger frame may also include a plurality of user fields. For details, refer to related description of the M - K user fields shown in FIG. 5 to FIG. 7. Details are not described herein again.

In addition, before the AP sends the second trigger frame, if all or some STAs in the K STAs upload the uplink data, the AP may send a termination indication to the all or some STAs in the K STAs, to terminate data transmission, and broadcast the second trigger frame after a fixed inter-frame spacing (X inter-frame spacing, XIFS).

If the all or some STAs in the K STAs transmit the uplink data on a first link, the AP may send the termination indication to the all or some STAs in the K STAs on a second link, to terminate uplink data transmission.

1504: The AP receives the TSN information in the second time block.

After the AP broadcasts the second trigger frame to the N STAs in the second time block, all or some STAs in the N STAs may upload the TSN information in the second time block. In other words, the AP receives, in the second time block, the TSN information uploaded by the all or some STAs in the N STAs.

It may also be understood that the second time block of the PPDU received by the AP carries the TSN information sent by the all or some STAs in the N STAs.

The second time block may include a plurality of symbols. The plurality of symbols may form a plurality of fields. For example, the plurality of fields may include: an EHT-STF field or a TSN-LTF field. The EHT-STF field may be used by the AP to perform automatic power gain control. The TSN-LTF may include one or more subcarriers. The STA may upload the TSN information on the corresponding one or more groups of subcarriers. For details about information carried in the second time block, refer to related description in step 203. Details are not described herein again.

In addition, if the second time block may include L groups of subcarriers, K groups of subcarriers may be used by the K STAs to maintain a transmission link to the AP, to avoid a data conflict when subsequent uplink data transmission continues.

In addition, in foregoing step 1503, if the all or some STAs in the K STAs transmit the uplink data on the first link, the AP may send the termination indication to the all or some STAs in the K STAs on the second link, to terminate the uplink data transmission. After step 1504, the AP may alternatively send, on the first link or the second link, an indication for continuing to transmit the uplink data to the all or some STAs in the K STAs, so that the uplink data can be accurately transmitted. Therefore, it is ensured that the AP can accurately receive the TSN information with a low delay, and the uplink data transmission can be further ensured.

Therefore, in this embodiment of this application, the AP schedules, by using the broadcast first trigger frame, the first time block to upload the uplink data. Then, the AP broadcasts the second trigger frame in the second time block, and schedules, by using the second trigger frame, the N STAs to upload the TSN information in the second time block. Therefore, a STA having the TSN service-related data may report the data to the AP in the second time block. It may be understood that the AP reserves a time block resource for the STA having the TSN service-related data, to implement low-delay reporting of the TSN information, and avoid a situation that the AP cannot receive the TSN information reported by the STA due to the data conflict. The AP can promptly obtain the TSN information by using the second time block, to implement accurate reporting of the TSN information by the STA, and reduce a reporting delay, of a TSN service, caused by contention for the upload resource.

For example, a structure of the PPDU shown in FIG. 15 may be shown in FIG. 16.

A time block 1 may be understood as the first time block, and a time block 2 may be understood as the second time block.

The uplink data may be transmitted in the time block 1.

After the uplink data transmission in the time block 1 is terminated, the XIFS may be spaced. Then, the AP broadcasts the second trigger frame in the time block 2. The second trigger frame is used to trigger the N STAs to report the TSN information. Then, the AP receives the TSN information uploaded by the all or some STAs in the N STAs.

In the time block 2, the TSN information sent by the all or some STAs in the N STAs is carried in an independent PPDU, which is referred to as a PPDU-2 hereinafter. The second time block includes the PPDU-2, and the PPDU-2 carries the TSN information uploaded by the all or some STAs in the N STAs. The PPDU-2 also includes fields such as an L_preamble, an EHT-STF, or a TSN-LTF. For details, refer to related description in FIG. 10. Details are not described herein again.

After the AP receives the PPDU-2, the XIFS may be spaced, and the AP may continue to perform data transmission in a next time block. For example, the AP may continue to transmit the uplink data, or deliver a trigger frame to trigger the transmission of the TSN information.

Therefore, in this implementation of this application, the AP may deliver the second trigger frame to the STA in the second time block, to trigger the N STAs to upload the TSN information. Therefore, it may be understood that the second time block is reserved for the STA having the TSN information to be uploaded, so that the STA having the TSN information to be uploaded can accurately transmit the TSN information in the second time block with a low delay.

The foregoing describes in detail the method for scheduling reporting of a delay-sensitive service and the method for reporting a delay-sensitive service according to the embodiment of this application. In addition, in the method for scheduling reporting of a delay-sensitive service and the method for reporting a delay-sensitive service according to the embodiment of this application, in addition to the foregoing manner of reducing the delay of reporting the TSN information, the delay of reporting the TSN information may be reduced in another manner.

If the AP can support two or more transmission links, one of the links may be reserved for reporting the TSN information. In this embodiment of this application, one link may alternatively be understood as one channel. Specifically, on the link, the AP may broadcast identification information of the reserved channel by using a broadcast beacon frame, so that the STA having the TSN information to be reported may transmit, through the reserved channel, the TSN information by using the broadcast identification information of the reserved channel.

Specifically, the beacon frame may include one or more of an information element, a length, a frequency band identifier, a channel identifier, and the like. The information element is used to indicate a data type used for transmission on the channel. For example, the data type may be a TSN service type. The length is used to indicate a length of the information element. The frequency band identifier is an identifier of a frequency band of the reserved channel. The channel identifier is an identifier of the reserved channel. The frequency band identifier and the channel identifier are used to explicitly indicate the channel reserved for reporting the TSN information.

For example, if the AP supports two links, including the first link and the second link, for transmission, the first link may be used by the K STAs to upload the uplink data, and the second link may be reserved for the N STAs to upload the TSN information.

Further, the AP may trigger, by using any one of the links supported by the AP, the STA to report the TSN information. Therefore, in this implementation of this application, when the AP supports data transmission on a plurality of links, one or more of the plurality of links may be reserved for reporting the TSN information, so that the STA can use the reserved channel to accurately report the TSN information with a low delay. The delay of reporting the TSN information is reduced.

In addition, this application further provides a manner of reporting a TSN service indication. This is described below. A STA having the TSN service may be reported in a preset format, so that the AP can accurately identify the STA having TSN service transmission data to be transmitted.

Specifically, the AP may collect an uplink transmission requirement by using a trigger frame of an NFRP variant. Specifically, an uplink transmission resource request may be classified into a plurality of manners. For example, a resource request may be directly performed, or a TSN resource request may be performed. The resource request and the TSN resource request may be distinguished by carrying different feedback type values.

For example, refer to Table 1.

**Table 1**

| Feedback type value | Description |
|---|---|
| 0 | Resource request |
| 1 | TSN resource request |
| 2 to 15 | Reserved |

The feedback type value is a parameter fed back by the STA to the AP. For example, when the STA feeds back 0, it indicates that the STA feeds back the resource request, that is, requests the AP to allocate a resource to the STA for transmitting the uplink data. When the STAfeeds back 1, it indicates that the STA feeds back the TSN resource request, that is, requests the AP to allocate a resource to the STA, to transmit the TSN service transmission data. Another value may be reserved for the STA to request resources used to transmit different types of data. Details are not described in this application. It should be noted that a request type (the resource request and the TSN resource request) corresponding to the feedback type value may change, and a correspondence presented in Table 1 is not limited herein. In this implementation of this application, the AP may collect resource requests of STAs, and can further accurately determine a data type of a resource requested by the STA for transmission. Therefore, the resource used to transmit the TSN service transmission data may be allocated to the STA feeding back the TSN resource request, to accurately transmit, with a delay, the TSN service transmission data.

The foregoing describes in detail the method according to this application. The following describes, based on FIG. 2 to FIG. 16, an apparatus according to this application.

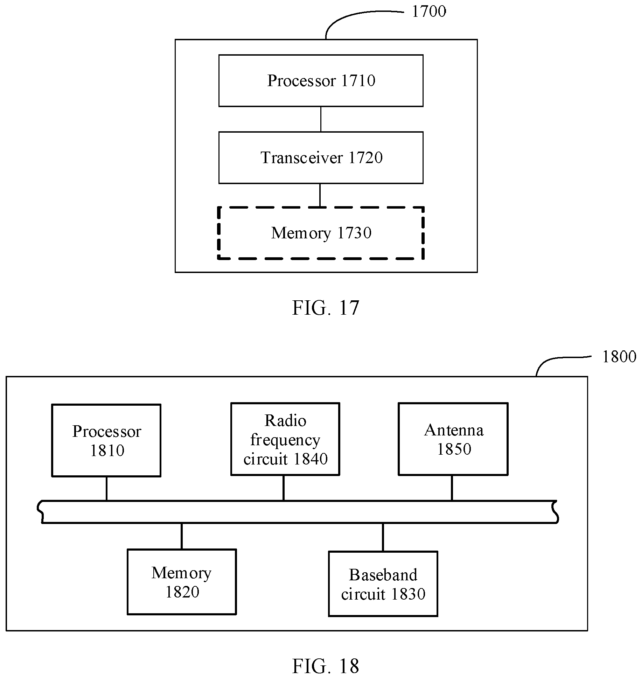

FIG. 17 shows the corresponding apparatus in the foregoing method embodiment. The apparatus may include the AP or the STA in FIG. 2 to FIG. 16.

The apparatus 1700 may include a processor 1710 and a transceiver 1720. Optionally, the apparatus 1700 may further include a memory 1730.

When the apparatus is an AP or a chip in the AP, the AP may perform any step performed by the AP in FIG. 2 to FIG. 16.

When the apparatus is a STA or a chip in the STA, the STA may perform any step performed by the STA in FIG. 2 to FIG. 16.

The following separately describes different implementations.

Implementation 1: When the apparatus is the AP or the chip in the AP, the apparatus specifically performs the following steps.

The transceiver 1720 is configured to broadcast a first trigger frame to Q stations STAs. The first trigger frame is used to schedule the Q stations to send a physical layer protocol data unit PPDU, the PPDU includes a plurality of time blocks, and the plurality of time blocks include a first time block and a second time block. The first time block is used by K STAs in the Q STAs to transmit uplink data, and the second time block is used by N STAs in the Q STAs to transmit time-sensitive network TSN information. Q is a positive integer greater than or equal to 1, K is a positive integer less than or equal to Q, N is a positive integer less than or equal to Q, and the TSN information is TSN service-related data.

The transceiver 1720 is further configured to receive the PPDU. The first time block of the PPDU includes uplink data of all or some STAs in the K STAs, and the second time block of the PPDU includes TSN information of all or some STAs in the N STAs.

Implementation 2: When the apparatus is the STA or the chip in the STA, the apparatus specifically performs the following steps.

The transceiver 1720 is configured to receive a first trigger frame from an AP. The first trigger frame is used to schedule sending of a PPDU, the PPDU includes a plurality of time blocks, and the plurality of time blocks include a first time block and a second time block. The first time block is used to transmit uplink data, and the second time block is used to transmit TSN information.

The transceiver 1720 is further configured to send the TSN information to the AP in the second time block of the PPDU. The TSN information is TSN service-related data.

With reference to the foregoing implementation 1 and implementation 2, the following describes some possible implementations.

In a possible implementation, a third trigger frame and a fourth trigger frame are aggregated in the first trigger frame. The third trigger frame is used to schedule the K STAs to report the uplink data in the first time block, and the fourth trigger frame is used to schedule the N STAs to report the TSN information in the second time block.

In a possible implementation, the first trigger frame includes M user fields, and M is a positive integer.

K user fields in the M user fields indicate the K STAs to upload the uplink data, and remaining M - K user fields are used to indicate the N STAs to upload the TSN information.

In a possible implementation, the N STAs are grouped into one or more groups of STAs, and identifiers of STAs included in each group of STAs in the one or more groups of STAs are consecutive identifiers.

The K user fields include association identifiers of the K STAs, and the M - K user fields include a start identifier of each group of STAs in the one or more groups of STAs.

In a possible implementation, the M - K user fields further include first indication information indicating a quantity of STAs included in each group of STAs.

In a possible implementation, the M - K user fields further include second indication information used to schedule the N STAs to report the TSN information.

In a possible implementation, a value of M - K is the same as a quantity of time blocks, in the PPDU, used to report the TSN information.

In a possible implementation, first K user fields in the M user fields include association identifiers of the K STAs, and the first trigger frame further includes a common field. The common field includes third indication information indicating a value of K, or the common field includes fourth indication information indicating a value of M - K. Implementation 3: When the apparatus is the AP or the chip in the AP, the apparatus specifically performs the following steps.

The transceiver 1720 is configured to send a first trigger frame to Q stations STAs. The first trigger frame is used to schedule the Q stations to send a physical layer protocol data unit PPDU, the PPDU includes a plurality of time blocks, and the plurality of time blocks include a first time block and a second time block. The first time block is used by K STAs in the Q STAs to transmit uplink data, and K is a positive integer less than or equal to Q.

The transceiver 1720 is further configured to broadcast a second trigger frame to N STAs in the Q STAs in the second time block. The second trigger frame is used to schedule the N STAs to transmit TSN information in the second time block, the TSN information is TSN service-related data, and N is a positive integer less than or equal to Q. The AP receives TSN information of all or some STAs in the N STAs in the second time block of the PPDU. The first time block of the PPDU includes uplink data of all or some STAs in the K STAs.

Implementation 4: When the apparatus is the STA or the chip in the STA, the apparatus specifically performs the following steps.

The transceiver 1720 is configured to receive a first trigger frame sent by an AP. The first trigger frame is used to schedule a PPDU, and the PPDU includes a plurality of time blocks. The plurality of time blocks include a first time block and a second time block, and the first time block is used to transmit uplink data.

The transceiver 1720 is further configured to receive a second trigger frame from the AP. The STA sends TSN information to the AP in the second time block of the PPDU, and the TSN information is TSN service-related data.

It should be understood that the apparatus 1700 according to this embodiment of this application may be the AP or the STA in the foregoing embodiments, and the foregoing and other management operations and/or functions of the modules in the apparatus 1700 are separately intended to implement corresponding steps of the foregoing methods. Details are not described herein again.

Alternatively, the apparatus 1700 may be configured as a general processing system, for example, commonly referred to as a chip. The processor 1710 may include one or more processors providing processing functions. The transceiver 1720 may be, for example, an input/output interface, a pin, a circuit, or the like. The input/output interface may be configured to be responsible for information interaction between the chip system and the outside. For example, the input/output interface may output transmission control information generated by a first access point AP to another module outside the chip for processing. The processor may execute computer execution instructions stored in the memory, to implement functions of the first access point in the foregoing method embodiments. In an example, the memory 1730 optionally included in the apparatus 1700 may be a storage unit, for example, a register, a cache, or the like, in the chip. Alternatively, the memory 1730 may further be a storage unit, for example, a read-only memory (read-only memory, ROM for short), another type of static storage device that can store static information and instructions, a random access memory (random access memory, RAM for short), or the like, located outside the chip. As shown in FIG. 18, this application further provides another apparatus. The apparatus may include the foregoing AP or STA.

When the apparatus is an AP or a chip in the AP, the AP may perform any step performed by the AP in FIG. 2 to FIG. 16.

When the apparatus is a STA or a chip in the STA, the STA may perform any step performed by the STA in FIG. 2 to FIG. 16.

The apparatus 1800 may include a processor 1810, a baseband circuit 1830, a radio frequency circuit 1840, and an antenna 1850. Optionally, the apparatus 1800 may further include a memory 1820. Components of the apparatus 1800 are coupled together through a bus. In addition to a data bus, a bus system further includes a power bus, a control bus, and a status signal bus. However, for clear description, various types of buses in the figure are marked as the bus system.

The processor 1810 may be configured to control the AP or the STA, and perform processing that is performed by the AP or the STA in the foregoing embodiments. The processor 1810 may perform processing processes related to the AP or the STA in the foregoing method embodiments and/or may be used for another process of the technology described in this application, and may further run an operating system, manage the bus, and execute a program or instructions stored in the memory.

The baseband circuit 1830, the radio frequency circuit 1840, and the antenna 1850 may be configured to support the AP or the STA to perform information receiving and sending, to support wireless communication between the AP or the STA, and another node. For example, transmission control information sent by the AP may be processed by the processor 1810. Baseband processing such as protocol-based encapsulation and encoding is performed by the baseband circuit 1830 on processed transmission control information. After radio frequency processing such as analog conversion, filtering, amplification, and up-conversion is further performed by the radio frequency circuit 1840 on transmission control information obtained through baseband processing, transmission control information is sent to the STA through the antenna 1850. It may be understood that the baseband circuit 1830, the radio frequency circuit 1840, and the antenna 1850 may be further configured to support communication between the AP and another network entity.

The memory 1820 may be configured to store program code and data of the AP or the STA, and the memory 1820 may be the memory 1730 in FIG. 17. In FIG. 18, the memory 1820 is shown as separated from the processor 1810. However, it is readily figured out by a person skilled in the art that the memory 1820 or any portion thereof may be located outside the apparatus 1800. For example, the memory 1820 may include a transmission cable and/or a computer product separated from a wireless node. These media may be accessed by the processor 1810 through the bus interface. Alternatively, the memory 1820 or any portion thereof may be integrated into the processor 1810, for example, may be a cache and/or a general purpose register.

In an example, the transceiver 1720 in FIG. 17 may include the baseband circuit 1830, the radio frequency circuit 1840, and the antenna 1850. The processor 1710 may be the processor 1810. In another example, the transceiver 1720 in FIG. 17 may include only the antenna in FIG. 18. The processor 1710 may include not only the processor 1810, but also the radio frequency circuit 1840 and the baseband circuit 1830. In still another example, the processor 1710 in FIG. 17 may include the processor 1810 and the baseband circuit 1830. The transceiver 1720 may include the radio frequency circuit 1840 and the antenna 1850.

It can be understood that FIG. 18 shows only a simplified design of the AP or the STA. For example, in actual application, the AP or the STA may include any quantity of transmitters, receivers, processors, memories, and the like, and all APs or STAs that can implement the embodiments of this application are within the protection scope of the embodiments of this application.

An embodiment of this application further provides a computer storage medium. The computer-readable storage medium stores instructions, and the instructions may be executed by one or more processors of a processing circuit. When the instructions are run on a computer, the computer is enabled to perform the methods in the foregoing aspects. An embodiment of this application further provides a chip system. The chip system includes a processor, configured to support a distributed unit, a centralized unit, and an AP or a STA to implement functions in the foregoing embodiments, for example, generating or processing data and/or information in the foregoing methods. In a possible design, the chip system may further include a memory. The memory is configured to store program instructions and data that are necessary to the distributed unit, the centralized unit, and the AP or the STA. The chip system may include a chip, or may include a chip and another discrete component.

An embodiment of this application further provides a processor, configured to be coupled to a memory. The processor is configured to perform the method and the function of the AP in any one of the foregoing embodiments.

An embodiment of this application further provides a processor, configured to be coupled to a memory. The processor is configured to perform the method and the function of the STA in any one of the foregoing embodiments.

An embodiment of this application further provides a computer program product including instructions. When the product runs on a computer, the computer is enabled to perform the method and the function of the AP in any one of the foregoing embodiments.

An embodiment of this application further provides a computer program product including instructions. When the product runs on a computer, the computer is enabled to perform the method and the function of the STA in any one of the foregoing embodiments.

An embodiment of this application further provides a wireless communications system. The system includes the AP and the STA in the foregoing embodiments.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedures or the functions according to this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer readable storage medium may be any usable medium accessible by a computer, or a data storage device, for example, a server, a data center, or the like integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have", and any other variants thereof are intended to cover non-exclusive inclusion, so that a process, method, system, product, or device that includes a series of units is not necessarily limited to those units, but may include other units not expressly listed or inherent to such a process, method, product, or device.

In conclusion, the foregoing embodiments are merely intended for describing the technical solutions of this application, but not for limiting this application.

## Claims

1. A method for scheduling reporting of a delay-sensitive service, comprising:
broadcasting (201), by an access point AP, a first trigger frame to Q stations STAs, wherein the first trigger frame is used to schedule the Q stations to send a physical layer protocol data unit PPDU, the PPDU comprises a plurality of time blocks, the plurality of time blocks comprise a first time block and a second time block, the first time block is used by K STAs in the Q STAs to transmit uplink data, the second time block is used by N STAs in the Q STAs to transmit time-sensitive network TSN information, Q is a positive integer greater than or equal to 1, K is a positive integer less than or equal to Q, N is a positive integer less than or equal to Q, and the TSN information is TSN service-related data; and
receiving (202), by the AP, the PPDU, wherein the first time block of the PPDU comprises uplink data of all or some STAs in the K STAs, and the second time block of the PPDU comprises TSN information of all or some STAs in the N STAs, wherein before the AP receives the TSN information of the all or some STAs in the N STAs, if the AP performs data transmission with the all or some STAs in the K STAs on a first link, the AP sends a termination indication to the all or some STAs in the K STAs on a second link, wherein the termination indication is used to indicate to terminate the data transmission; and
after the AP receives the TSN information of the all or some STAs in the N STAs, the AP sends a transmission indication to the all or some STAs in the K STAs, wherein the transmission indication is used to indicate to continue the data transmission.

2. The method according to claim 1, wherein a third trigger frame and a fourth trigger frame are aggregated in the first trigger frame, wherein
the third trigger frame is used to schedule the K STAs to report the uplink data in the first time block, and the fourth trigger frame is used to schedule the N STAs to report the TSN information in the second time block.

3. The method according to any one of claims 1 to 2, wherein the first trigger frame comprises M user fields, M is a positive integer, wherein
K user fields in the M user fields indicate the K STAs to upload the uplink data, and remaining M - K user fields are used to indicate the N STAs to upload the TSN information.

4. The method according to claim 3, wherein
the N STAs are grouped into one or more groups of STAs, identifiers of STAs comprised in each group of STAs in the one or more groups of STAs are consecutive identifiers; and
the K user fields comprise association identifiers of the K STAs, and the M - K user fields comprise a start identifier of each group of STAs in the one or more groups of STAs.

5. The method according to claim 4, wherein
the M - K user fields further comprise first indication information indicating a quantity of STAs comprised in each group of STAs.

6. The method according to any one of claims 3 to 5, wherein
the M - K user fields further comprise second indication information used to schedule the N STAs to report the TSN information.

7. The method according to any one of claims 3 to 6, wherein
a value of M - K is the same as a quantity of time blocks, in the PPDU, used to report the TSN information.

8. The method according to claim 3, wherein
first K user fields in the M user fields comprise association identifiers of the K STAs; and
the first trigger frame further comprises a common field, wherein the common field comprises third indication information indicating a value of K, or the common field comprises fourth indication information indicating a value of M - K.

9. A method for reporting a delay-sensitive service, comprising:
receiving, by a STA, a first trigger frame from an AP, wherein the first trigger frame is used to schedule sending of a PPDU, the PPDU comprises a plurality of time blocks, the plurality of time blocks comprise a first time block and a second time block, the first time block is used to transmit uplink data, and the second time block is used to transmit TSN information; and
sending, by the STA, the TSN information to the AP in the second time block of the PPDU, wherein the TSN information is TSN service-related data,
wherein before the STA sends the TSN information if the STA performs data transmission with the AP on a first link, the STA receives a termination indication on a second link, wherein the termination indication is used to indicate to terminate the data transmission; and
after the STA sends the TSN information, the STA receives a transmission indication, wherein the transmission indication is used to indicate to continue the data transmission.

10. The method according to claim 9, wherein the plurality of time blocks further comprise a third time block, the third time block is before the second time block, and before the sending, by the STA, the TSN information to the AP based on a first network resource, the method further comprises:
sending, by the STA, a preset field to the AP by using the third time block, wherein the preset field is used by the AP to demodulate the TSN information.

11. An access point (1700), comprising:
a transceiver (1720), configured to broadcast a first trigger frame to Q stations STAs, wherein the first trigger frame is used to schedule the Q stations to send a physical layer protocol data unit PPDU, the PPDU comprises a plurality of time blocks, the plurality of time blocks comprise a first time block and a second time block, the first time block is used by K STAs in the Q STAs to transmit uplink data, the second time block is used by N STAs in the Q STAs to transmit time-sensitive network TSN information, Q is a positive integer greater than or equal to 1, K is a positive integer less than or equal to Q, N is a positive integer less than or equal to Q, and the TSN information is TSN service-related data; wherein
the transceiver (1720) is further configured to receive the PPDU, the first time block of the PPDU comprises uplink data of all or some STAs in the K STAs, and the second time block of the PPDU comprises TSN information of all or some STAs in the N STAs, wherein
the transceiver (1720) is further configured to: before the AP receives the TSN information of the all or some STAs in the N STAs, if the all or some STAs in the K STAs perform data transmission on a first link, send a termination indication to the all or some STAs in the K STAs on a second link, wherein the termination indication is used to indicate to terminate the data transmission; and
the transceiver (1720) is further configured to: after the AP receives the TSN information of the all or some STAs in the N STAs, send a transmission indication to the all or some STAs in the K STAs, wherein the transmission indication is used to indicate to continue the data transmission.

12. The access point (1700) according to claim 11, wherein a third trigger frame and a fourth trigger frame are aggregated in the first trigger frame,
the third trigger frame is used to schedule the K STAs to report the uplink data in the first time block, and the fourth trigger frame is used to schedule the N STAs to report the TSN information in the second time block.

13. The access point (1700) according to any one of claims 11 to 12, wherein the first trigger frame comprises M user fields, M is a positive integer,
K user fields in the M user fields indicate the K STAs to upload the uplink data, and remaining M - K user fields are used to indicate the N STAs to upload the TSN information.

## Patentansprüche

1. Verfahren zum Planen einer Berichterstattung eines verzögerungskritischen Dienstes, umfassend:
Rundsenden (201), durch einen Zugriffspunkt AP, eines ersten Auslöseframes an Q Stationen STAs, wobei der erste Auslöseframe verwendet wird, um ein Senden einer Bitübertragungsschichtprotokolldateneinheit PPDU durch die Q Stationen zu planen, wobei die PPDU eine Mehrzahl von Zeitblöcken umfasst, wobei die Mehrzahl von Zeitblöcken einen ersten Zeitblock und einen zweiten Zeitblock umfasst, wobei der erste Zeitblock durch K STAs in den Q STAs verwendet wird, um Aufwärtsstreckendaten zu übertragen, wobei der zweite Zeitblock durch N STAs in den Q STAs verwendet wird, um "Time-Sensitive-Network"-TSN-Informationen zu übertragen, wobei Q eine positive Ganzzahl größer als oder gleich 1 ist, K eine positive Ganzzahl kleiner als oder gleich Q ist, N eine positive Ganzzahl kleiner als oder gleich Q ist und die TSN-Informationen TSN-Dienst-bezogene Daten sind; und
Empfangen (202), durch den AP, der PPDU, wobei der erste Zeitblock der PPDU Aufwärtsstreckendaten aller oder einiger STAs in den K STAs umfasst und der zweite Zeitblock der PPDU TSN-Informationen aller oder einiger STAs in den N STAs umfasst, wobei, bevor der AP die TSN-Informationen aller oder einiger der STAs in den N STAs empfängt, wenn der AP eine Datenübertragung mit allen oder einigen der STAs in den K STAs auf einer ersten Verbindung durchführt, der AP eine Beendigungsanzeige an alle oder einige der STAs in den K STAs auf einer zweiten Verbindung sendet, wobei die Beendigungsanzeige verwendet wird, um anzuzeigen, dass die Datenübertragung beendet werden soll; und
wobei, nachdem der AP die TSN-Informationen aller oder einiger der STAs in den N STAs empfängt, der AP eine Übertragungsanzeige an alle oder einige der STAs in den K STAs sendet, wobei die Übertragungsanzeige verwendet wird, um anzuzeigen, dass die Datenübertragung fortgesetzt werden soll.

2. Verfahren nach Anspruch 1, wobei ein dritter Auslöseframe und ein vierter Auslöseframe in dem ersten Auslöseframe aggregiert werden, wobei
der dritte Auslöseframe verwendet wird, um ein Berichten der Aufwärtsstreckendaten durch die K STAs in dem ersten Zeitblock zu planen, und der vierte Auslöseframe verwendet wird, um ein Berichten der TSN-Informationen durch die N STAs in dem zweiten Zeitblock zu planen.

3. Verfahren nach einem der Ansprüche 1 bis 2, wobei der erste Auslöseframe M Benutzerfelder umfasst, wobei M eine positive Ganzzahl ist, wobei
K Benutzerfelder in den M Benutzerfeldern den K STAs anzeigen, dass die Aufwärtsstreckendaten hochgeladen werden sollen, und verbleibende M - K Benutzerfelder verwendet werden, um den N STAs anzuzeigen, dass die TSN-Informationen hochgeladen werden sollen.

4. Verfahren nach Anspruch 3, wobei
die N STAs in eine oder mehrere Gruppen von STAs gruppiert werden, wobei Kennungen der STAs, die in jeder Gruppe von STAs in der einen oder den mehreren Gruppen von STAs enthalten sind, aufeinanderfolgende Kennungen sind; und
die K Benutzerfelder Assoziationskennungen der K STAs umfassen und die M - K Benutzerfelder eine Startkennung jeder Gruppe von STAs in der oder den mehreren Gruppen von STAs umfassen.

5. Verfahren nach Anspruch 4, wobei
die M - K Benutzerfelder ferner erste Anzeigeinformationen umfassen, die eine Anzahl an STAs anzeigen, die in jeder Gruppe von STAs enthalten sind.

6. Verfahren nach einem der Ansprüche 3 bis 5, wobei
die M - K Benutzerfelder ferner zweite Anzeigeinformationen umfassen, die verwendet werden, um ein Berichten der TSN-Informationen durch die N STAs zu planen.

7. Verfahren nach einem der Ansprüche 3 bis 6, wobei
ein Wert von M - K derselbe ist wie eine Anzahl von Zeitblöcken in der PPDU, die verwendet werden, um die TSN-Informationen zu berichten.

8. Verfahren nach Anspruch 3, wobei
erste K Benutzerfelder in den M Benutzerfeldern Assoziationskennungen der K STAs umfassen; und
der erste Auslöseframe ferner ein allgemeines Feld umfasst, wobei das allgemeine Feld dritte Anzeigeinformationen umfasst, die einen Wert von K anzeigen, oder das allgemeine Feld vierte Anzeigeinformationen umfasst, die einen Wert von M - K anzeigen.

9. Verfahren zur Berichterstattung eines verzögerungskritischen Dienstes, umfassend:
Empfangen, durch eine STA, eines ersten Auslöseframes von einem AP, wobei der erste Auslöseframe verwendet wird, um ein Senden einer PPDU zu planen, wobei die PPDU eine Mehrzahl von Zeitblöcken umfasst, wobei die Mehrzahl von Zeitblöcken einen ersten Zeitblock und einen zweiten Zeitblock umfasst, wobei der erste Zeitblock verwendet wird, um Aufwärtsstreckendaten zu übertragen, und der zweite Zeitblock verwendet wird, um TSN-Informationen zu übertragen; und
Senden, durch die STA, der TSN-Informationen an den AP in dem zweiten Zeitblock der PPDU, wobei die TSN-Informationen TSN-Dienst-bezogene Daten sind,
wobei, bevor die STA die TSN-Informationen sendet, wenn die STA eine Datenübertragung mit dem AP auf einer ersten Verbindung durchführt, die STA eine Beendigungsanzeige auf einer zweiten Verbindung empfängt, wobei die Beendigungsanzeige verwendet wird, um anzuzeigen, dass die Datenübertragung beendet werden soll; und
nachdem die STA die TSN-Informationen sendet, die STA eine Übertragungsanzeige empfängt, wobei die Übertragungsanzeige verwendet wird, um anzuzeigen, dass die Datenübertragung fortgesetzt werden soll.

10. Verfahren nach Anspruch 9, wobei die Mehrzahl von Zeitblöcken ferner einen dritten Zeitblock umfasst, wobei der dritte Zeitblock vor dem zweiten Zeitblock liegt, und wobei, vor dem Senden, durch die STA, der TSN-Informationen an den AP basierend auf einer ersten Netzwerkressource, das Verfahren ferner Folgendes umfasst:
Senden, durch die STA, eines voreingestellten Felds an den AP unter Verwendung des dritten Zeitblocks, wobei das voreingestellte Feld durch den AP verwendet wird, um die TSN-Informationen zu demodulieren.

11. Zugriffspunkt (1700), umfassend:
einen Sendeempfänger (1720), der dazu konfiguriert ist, einen ersten Auslöseframe an Q Stationen STAs rundzusenden, wobei der erste Auslöseframe verwendet wird, um ein Senden einer Bitübertragungsschichtprotokolldateneinheit PPDU durch die Q Stationen zu planen, wobei die PPDU eine Mehrzahl von Zeitblöcken umfasst, wobei die Mehrzahl von Zeitblöcken einen ersten Zeitblock und einen zweiten Zeitblock umfasst, wobei der erste Zeitblock durch K STAs in den Q STAs verwendet wird, um Aufwärtsstreckendaten zu übertragen, wobei der zweite Zeitblock durch N STAs in den Q STAs verwendet wird, um "Time-Sensitive-Network"-TSN-Informationen zu übertragen, wobei Q eine positive Ganzzahl größer als oder gleich 1 ist, K eine positive Ganzzahl kleiner als oder gleich Q ist, N eine positive Ganzzahl kleiner als oder gleich Q ist und die TSN-Informationen TSN-Dienst-bezogene Daten sind; wobei
der Sendeempfänger (1720) ferner dazu konfiguriert ist, die PPDU zu empfangen, wobei der erste Zeitblock der PPDU Aufwärtsstreckendaten aller oder einiger STAs in den K STAs umfasst und der zweite Zeitblock der PPDU TSN-Informationen aller oder einiger STAs in den N STAs umfasst, wobei
der Sendeempfänger (1720) ferner zu Folgendem konfiguriert ist: bevor der AP die TSN-Informationen aller oder einiger der STAs in den N STAs empfängt, wenn alle oder einige der STAs in den K STAs eine Datenübertragung auf einer ersten Verbindung durchführen, Senden einer Beendigungsanzeige an alle oder einige der STAs in den K STAs auf einer zweiten Verbindung, wobei die Beendigungsanzeige verwendet wird, um anzuzeigen, dass die Datenübertragung beendet werden soll; und
der Sendeempfänger (1720) ferner zu Folgendem konfiguriert ist: nachdem der AP die TSN-Informationen aller oder einiger der STAs in den N STAs empfängt, Senden einer Übertragungsanzeige an alle oder einige der STAs in den K STAs, wobei die Übertragungsanzeige verwendet wird, um anzuzeigen, dass die Datenübertragung fortgesetzt werden soll.

12. Zugriffspunkt (1700) nach Anspruch 11, wobei ein dritter Auslöseframe und ein vierter Auslöseframe in dem ersten Auslöseframe aggregiert werden,
wobei der dritte Auslöseframe verwendet wird, um ein Berichten der Aufwärtsstreckendaten durch die K STAs in dem ersten Zeitblock zu planen, und der vierte Auslöseframe verwendet wird, um ein Berichten der TSN-Informationen durch die N STAs in dem zweiten Zeitblock zu planen.

13. Zugriffspunkt (1700) nach einem der Ansprüche 11 bis 12, wobei der erste Auslöseframe M Benutzerfelder umfasst, wobei M eine positive Ganzzahl ist,
wobei K Benutzerfelder in den M Benutzerfeldern den K STAs anzeigen, dass die Aufwärtsstreckendaten hochgeladen werden sollen, und verbleibende M - K Benutzerfelder verwendet werden, um den N STAs anzuzeigen, dass die TSN-Informationen hochgeladen werden sollen.

## Revendications

1. Procédé de planification de rapport d'un service sensible au retard, comprenant :
la diffusion (201), par un point d'accès AP, d'une première trame de déclenchement à Q stations STA, la première trame de déclenchement étant utilisée pour planifier l'envoi par les Q stations d'une unité de données de protocole de couche physique PPDU, la PPDU comprenant une pluralité de blocs temporels, la pluralité de blocs temporels comprenant un premier bloc temporel et un deuxième bloc temporel, le premier bloc temporel étant utilisé par K STA parmi les Q STA pour transmettre des données de liaison montante, le deuxième bloc temporel étant utilisé par N STA parmi les Q STA pour transmettre des informations de réseau sensible au temps TSN, Q étant un entier positif supérieur ou égal à 1, K étant un entier positif inférieur ou égal à Q, N étant un entier positif inférieur ou égal à Q, et les informations TSN étant des données liées au service TSN ; et
la réception (202), par l'AP, de la PPDU, le premier bloc temporel de la PPDU comprenant des données de liaison montante de toutes ou certaines STA parmi les K STA, et le deuxième bloc temporel de la PPDU comprenant des informations TSN de toutes ou certaines STA parmi les N STA, avant que l'AP ne reçoive les informations TSN de toutes ou certaines STA parmi les N STA, si l'AP réalise une transmission de données avec toutes ou certaines STA parmi les K STA sur une première liaison, l'AP envoie une indication de terminaison à toutes ou certaines STA parmi les K STA sur une seconde liaison, l'indication de terminaison étant utilisée pour indiquer de terminer la transmission de données ; et
après que l'AP reçoit les informations TSN de toutes ou certaines STA parmi les N STA, l'AP envoie une indication de transmission à toutes ou certaines STA parmi les K STA, l'indication de transmission étant utilisée pour indiquer de continuer la transmission de données.

2. Procédé selon la revendication 1, une troisième trame de déclenchement et une quatrième trame de déclenchement étant agrégées dans la première trame de déclenchement,
la troisième trame de déclenchement étant utilisée pour planifier le rapport des données de liaison montante par les K STA dans le premier bloc temporel, et la quatrième trame de déclenchement étant utilisée pour planifier le rapport des informations TSN par les N STA dans le deuxième bloc temporel.

3. Procédé selon l'une quelconque des revendications 1 et 2, la première trame de déclenchement comprenant M champs utilisateur, M étant un entier positif,
K champs utilisateur parmi les M champs utilisateur indiquant aux K STA de télécharger les données de liaison montante, et les M - K champs utilisateur restants étant utilisés pour indiquer aux N STA de télécharger les informations TSN.

4. Procédé selon la revendication 3,
les N STA étant regroupées en un ou plusieurs groupes de STA, les identifiants des STA comprises dans chaque groupe de STA parmi le ou les groupes de STA étant des identifiants consécutifs ; et
les K champs utilisateur comprenant des identifiants d'association des K STA, et les M - K champs utilisateur comprenant un identifiant de début de chaque groupe de STA parmi le ou les groupes de STA.

5. Procédé selon la revendication 4,
les M - K champs utilisateur comprenant en outre des premières informations d'indication indiquant une quantité de STA comprises dans chaque groupe de STA.

6. Procédé selon l'une quelconque des revendications 3 à 5,
les M - K champs utilisateur comprenant en outre des deuxièmes informations d'indication utilisées pour planifier le rapport des informations TSN par les N STA.

7. Procédé selon l'une quelconque des revendications 3 à 6,
une valeur de M - K étant identique à une quantité de blocs temporels, dans la PPDU, utilisés pour rapporter les informations TSN.

8. Procédé selon la revendication 3,
les premiers K champs utilisateur parmi les M champs utilisateur comprenant des identifiants d'association des K STA ; et
la première trame de déclenchement comprenant en outre un champ commun, le champ commun comprenant des troisièmes informations d'indication indiquant une valeur de K, ou le champ commun comprenant des quatrièmes informations d'indication indiquant une valeur de M - K.

9. Procédé de rapport d'un service sensible au retard, comprenant :
la réception, par une STA, d'une première trame de déclenchement provenant d'un AP, la première trame de déclenchement étant utilisée pour planifier l'envoi d'une PPDU, la PPDU comprenant une pluralité de blocs temporels, la pluralité de blocs temporels comprenant un premier bloc temporel et un deuxième bloc temporel, le premier bloc temporel étant utilisé pour transmettre des données de liaison montante, et le deuxième bloc temporel étant utilisé pour transmettre des informations TSN ; et
l'envoi, par la STA, des informations TSN à l'AP dans le deuxième bloc temporel de la PPDU, les informations TSN étant des données liées au service TSN,
avant que la STA n'envoie les informations TSN si la STA effectue une transmission de données avec l'AP sur une première liaison, la STA recevant une indication de terminaison sur une seconde liaison, l'indication de terminaison étant utilisée pour indiquer de terminer la transmission de données ; et
après que la STA envoie les informations TSN, la STA recevant une indication de transmission, l'indication de transmission étant utilisée pour indiquer de continuer la transmission de données.

10. Procédé selon la revendication 9, la pluralité de blocs temporels comprenant en outre un troisième bloc temporel, le troisième bloc temporel étant avant le deuxième bloc temporel, et avant l'envoi, par la STA, des informations TSN à l'AP sur la base d'une première ressource réseau, le procédé comprenant en outre :
l'envoi, par la STA, d'un champ prédéfini à l'AP en utilisant le troisième bloc temporel, le champ prédéfini étant utilisé par l'AP pour démoduler les informations TSN.

11. Point d'accès (1700) comprenant :
un émetteur-récepteur (1720), configuré pour diffuser une première trame de déclenchement à Q stations STA, la première trame de déclenchement étant utilisée pour planifier l'envoi par les Q stations d'une unité de données de protocole de couche physique PPDU, la PPDU comprenant une pluralité de blocs temporels, la pluralité de blocs temporels comprenant un premier bloc temporel et un deuxième bloc temporel, le premier bloc temporel étant utilisé par K STA parmi les Q STA pour transmettre des données de liaison montante, le deuxième bloc temporel étant utilisé par N STA parmi les Q STA pour transmettre des informations de réseau sensible au temps TSN, Q étant un entier positif supérieur ou égal à 1, K étant un entier positif inférieur ou égal à Q, N étant un entier positif inférieur ou égal à Q, et les informations TSN étant des données liées au service TSN ;
l'émetteur-récepteur (1720) étant en outre configuré pour recevoir la PPDU, le premier bloc temporel de la PPDU comprenant des données de liaison montante de toutes ou certaines STA parmi les K STA, et le deuxième bloc temporel de la PPDU comprenant des informations TSN de toutes ou certaines STA parmi les N STA,
l'émetteur-récepteur (1720) étant en outre configuré pour : avant que l'AP ne reçoive les informations TSN de toutes ou certaines STA parmi les N STA, si toutes ou certaines STA parmi les K STA effectuent une transmission de données sur une première liaison, envoyer une indication de terminaison à toutes ou certaines STA parmi les K STA sur une seconde liaison, l'indication de terminaison étant utilisée pour indiquer de terminer la transmission de données ; et
l'émetteur-récepteur (1720) étant en outre configuré pour : après que l'AP reçoit les informations TSN de toutes ou certaines STA parmi les N STA, envoyer une indication de transmission à toutes ou certaines STA parmi les K STA, l'indication de transmission étant utilisée pour indiquer de continuer la transmission de données.

12. Point d'accès (1700) selon la revendication 11, une troisième trame de déclenchement et une quatrième trame de déclenchement étant agrégées dans la première trame de déclenchement,
la troisième trame de déclenchement étant utilisée pour planifier le rapport des données de liaison montante par les K STA dans le premier bloc temporel, et la quatrième trame de déclenchement étant utilisée pour planifier le rapport des informations TSN par les N STA dans le deuxième bloc temporel.

13. Point d'accès (1700) selon l'une quelconque des revendications 11 à 12, la première trame de déclenchement comprenant M champs utilisateur, M étant un entier positif,
K champs utilisateur parmi les M champs utilisateur indiquant aux K STA de télécharger les données de liaison montante, et les M - K champs utilisateur restants étant utilisés pour indiquer aux N STA de télécharger les informations TSN.
